# EUROPEAN PATENT APPLICATION

(11) **EP 4 699 423 A1**
(43) Date of publication of application: **25.02.2026**
(21) Application number: 25183142.6
(22) Date of filing: 16.06.2025
(51) Int. Cl.: A01B 35/10, A01B 39/24, B60B 35/10, B62D 49/06

(54) **WORKING VEHICLE**

(30) Priority: 19.08.2024 JP 2024137746
(71) Applicant: KUBOTA CORPORATION, Osaka-shi, Osaka 556-8601 (JP)
(72) Inventor: NISHIDA, Keisuke, SAKAI-SHI, OSAKA, 5900908 (JP); SHUKUNO, Ryuki, SAKAI-SHI, OSAKA, 5900908 (JP); KONO, Michita, SAKAI-SHI, OSAKA, 5900908 (JP); SOTA, Hiroshi, SAKAI-SHI, OSAKA, 5900908 (JP); TAKAMOTO, Yuta, SAKAI-SHI, OSAKA, 5900908 (JP)
(74) Representative: Cabinet Beau de Loménie

(57) **Abstract**

A working vehicle (1) includes a travel vehicle body (11), a traveling device (31) to support the travel vehicle body (11) such that the travel vehicle body (11) is allowed to travel, a changer (35C) to be driven by a hydraulic actuator (39) to change a track width (W1) of the traveling device (31), and a controller (61) configured or programmed to perform a first change control in which the controller (61) repeats a drive control until the track width (W1) satisfies a target value (W2), the drive control being a control to drive the hydraulic actuator (39) such that the track width (W1) reaches the target value (W2). The controller (61) is configured or programmed to perform the drive control and an idle control alternately from when the first change control is started to when the track width (W1) satisfies the target value (W2), the idle control being a control to not drive the hydraulic actuator (39) for an idle time (T).

## Description

### BACKGROUND OF THE INVENTION

### Field of the Invention

The present invention relates to a working vehicle such as a tractor.

### Description of the Related Art

A working vehicle disclosed in Japanese Unexamined Patent Application Publication No. 2014-205440 includes: a display unit to notify an operator of information related to a machine body; an actuator to change a track; a setting operator to configure settings related to the machine body; a sensor to detect the current value of the track; and a controller configured to control the driving of the actuator such that the current value of the track reaches a set value set with the setting operator. The controller causes the display unit to display the current and set values of the track.

The working vehicle in Japanese Unexamined Patent Application Publication No. 2014-205440 has a track (track width) that can be changed to a set value by means of the actuator, and allows easy confirmation of the current and set values of the track width. In particular, the controller of the working vehicle in Japanese Unexamined Patent Application Publication No. 2014-205440 is configured or programmed to, when the track width does not fall within a predetermined range relative to the set value, control the actuator such that the track width falls within the predetermined range.

However, the control performed by the controller has room for improvement for cases where it is not possible to keep the current value within the above-mentioned range.

### SUMMARY OF THE INVENTION

The present invention is directed to addressing the above-mentioned problem associated with the related art. Accordingly, it is an object of the present invention to provide a working vehicle having a track width that can be changed appropriately to a target value.

A working vehicle according to an example embodiment of the present invention includes a travel vehicle body, a traveling device to support the travel vehicle body such that the travel vehicle body is allowed to travel, a changer to be driven by a hydraulic actuator to change a track width of the traveling device, and a controller configured or programmed to perform a first change control in which the controller repeats a drive control until the track width satisfies a target value, the drive control being a control to drive the hydraulic actuator such that the track width reaches the target value.

The controller may be configured or programmed to perform the drive control and an idle control alternately from when the first change control is started to when the track width satisfies the target value, the idle control being a control to not drive the hydraulic actuator for an idle time.

The idle time may be defined based on a temperature of hydraulic fluid to drive the hydraulic actuator.

The idle time may be defined such that the idle time is longer when a rise in the temperature of hydraulic fluid per unit time is a second rise than when the rise in the temperature of hydraulic fluid per unit time is a first rise, the second rise being greater than the first rise.

The controller may be configured or programmed to end the first change control when the number of times the controller has performed the drive control reaches a set number during a period from when the first change control is started to when the track width satisfies the target value.

The working vehicle may further include an output interface to output a notification when the number of times the controller has performed the drive control reaches a set number during a period from when the first change control is started to when the track width satisfies the target value.

The set number may be defined based on a tilt angle of the travel vehicle body with respect to a horizontal plane.

The set number may be defined such that the set number is less when the tilt angle is a second tilt angle than when the tilt angle is a first tilt angle, the second tilt angle being less than the first tilt angle.

The controller may be configured or programmed to suspend the current first change control when the travel vehicle body is tilted at an angle equal to or greater than a predetermined angle with respect to a horizontal plane.

The working vehicle may further include a working device attached to the travel vehicle body to perform work as the travel vehicle body travels. The controller may be configured or programmed to suspend the current first change control when the working device is performing work.

The controller may be configured or programmed to perform a second change control instead of the first change control when the traveling device causes the travel vehicle body to turn, the second change control being a control in which the controller continuously drives the hydraulic actuator such that the track width reaches the target value until the track width satisfies the target value.

With the working vehicle configured as described above, the track width can be changed appropriately to a target value.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a schematic side view of a working vehicle.
FIG. 2 is a schematic plan view of the working vehicle.
FIG. 3 illustrates a control system of the working vehicle.
FIG. 4 illustrates changing of the track width of a traveling device.
FIG. 5 illustrates a hydraulic system related to a changer.
FIG. 6 is a front view of the working vehicle plowing a furrow.
FIG. 7 is a plan view of the working vehicle plowing a furrow.
FIG. 8 illustrates the working vehicle performing work on an agricultural field provided with ridges.
FIG. 9 illustrates target values for the track width.
FIG. 10 illustrates an example of a settings screen.
FIG. 11 illustrates control performed by a controller in a first mode and a second mode.
FIG. 12 illustrates an example of the procedure for a first change process.
FIG. 13 illustrates an example of a single execution of drive control.
FIG. 14 illustrates another example of a single execution of drive control.
FIG. 15 is a first map representing the relationship between a rise in temperature and idle time.
FIG. 16 is a second map representing the relationship between fluid temperature and idle time.
FIG. 17 is a third map representing the relationship between a difference in temperature and idle time.
FIG. 18 illustrates a path of travel on an agricultural field.
FIG. 19 illustrates a fourth map representing the relationship between tilt angle and set number.
FIG. 20 illustrates a fifth map representing the relationship between a change in tilt angle and set number.
FIG. 21 illustrates an example of the procedure for determining whether at least one end condition is satisfied.
FIG. 22 illustrates an example of a confirmation screen.
FIG. 23 illustrates an example of the procedure for a second change process.
FIG. 24 illustrates an example of the procedure for a third change process.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

An embodiment of the present invention will now be described with reference to the drawings.

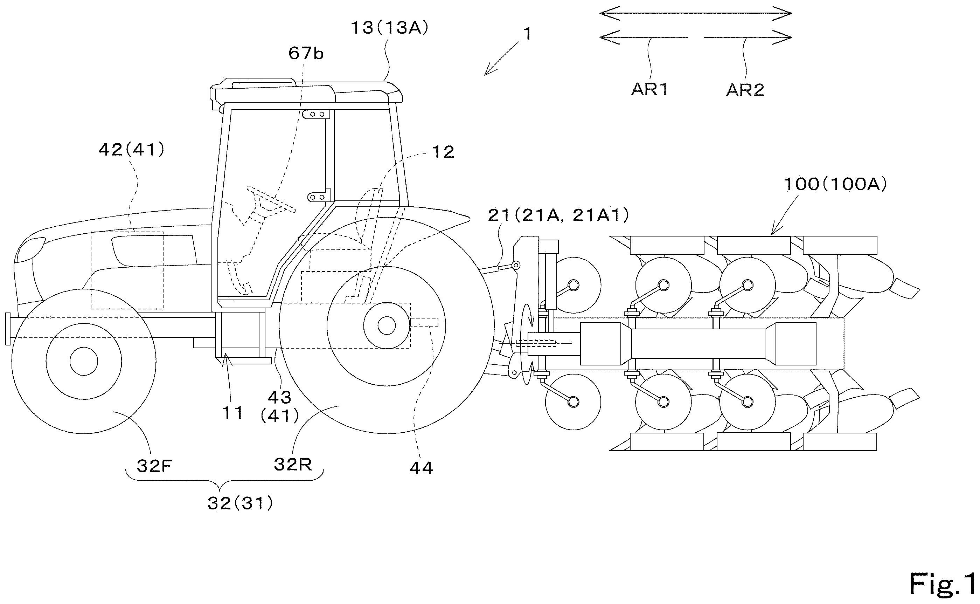

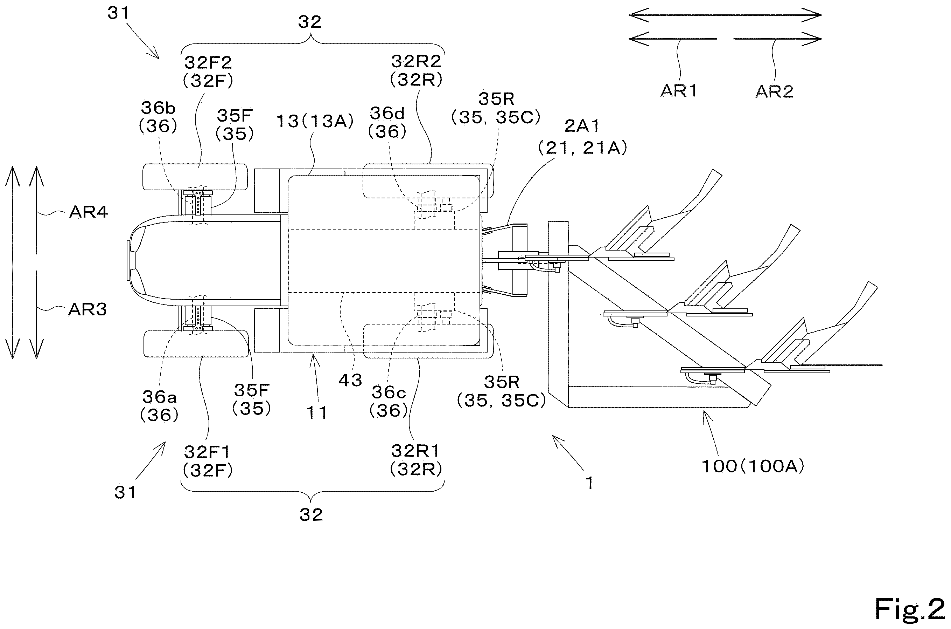

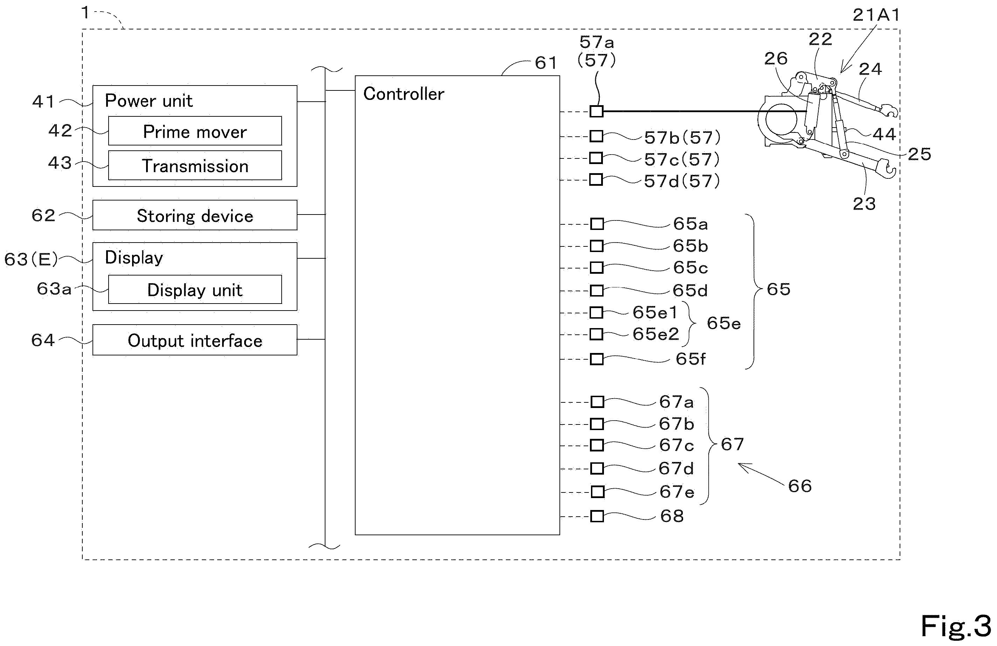

FIG. 1 is a schematic side view of a working vehicle 1. FIG. 2 is a schematic plan view of the working vehicle 1. FIG. 3 illustrates a control system of the working vehicle 1. As illustrated in FIGS. 1 and 2, the working vehicle 1 is a vehicle that travels by means of a traveling device 31. The working vehicle 1 is, for example, a tractor with a travel vehicle body 11 (machine body) to which a working device 100 (implement) can be mounted. Hereinafter, the working vehicle 1 will be described with reference, by way of example, to a tractor including an operator's seat 12 and manually operated by an operator seated on the operator's seat 12.

Although not described in detail, the working vehicle 1 may be operated by automatic control that does not rely on operator's manual operation, or by remote control based on remote manual operation via a remote operation device. The working vehicle 1 is not limited to a tractor. The working vehicle 1 may be a farm vehicle such as a combine or a rice transplanter, or a construction vehicle such as a compact track loader or a backhoe.

In the following description of the present example embodiment, the direction (the direction indicated by arrows AR1 in FIGS. 1 and 2) in which the operator seated on the operator's seat 12 of the working vehicle 1 faces is referred to as frontward, and the direction (the direction indicated by arrows AR2 in FIGS. 1 and 2) opposite to this direction is referred to as rearward. The direction leftward of the operator (the near side of FIG. 1; the direction indicated by arrows AR3 in FIG. 2) is referred to as leftward, and the direction rightward of the operator (the far side of FIG. 1; the direction indicated by arrows AR4 in FIG. 2) is referred to as rightward. The horizontal direction, which is a direction orthogonal to the front-rear direction, is referred to as width direction.

As illustrated in FIGS. 1 and 2, the working vehicle 1 includes the travel vehicle body 11. The travel vehicle body 11 supports various devices and equipment included in the working vehicle 1. For example, the travel vehicle body 11 includes the operator's seat 12, and a protective structure 13 that protects the operator's seat 12. The protective structure 13 is, for example, a cabin 13A surrounding the operator's seat 12. The protective structure 13 is not limited to the cabin 13A but may be a canopy or a ROPS erected at the rear of the operator's seat 12. The working device 100, which performs work, is coupled to the travel vehicle body 11.

The working device 100 is a device that performs work. In particular, the working device 100 performs work as the travel vehicle body 11 travels. Examples of the working device 100 include: a cultivator for cultivation; a plow for plowing; a ridger for ridging; a seeder for sowing (seeding); a furrower for furrowing; a harvester for harvesting crops; a mower for mowing forage grass or the like; a tedder for tedding forage grass or the like; a rake for raking forage grass or the like; a baler for baling forage grass or the like; a fertilizer spreader for spreading fertilizer; an agricultural chemical spreader for spreading agricultural chemicals; and a separator for separating crops. FIGS. 1 and 2 depict a plow (a reversible plow 100A) as an example of the working device 100. The working device 100 is coupled to the travel vehicle body 11 via a coupling device 21.

The working vehicle 1 includes the coupling device 21. The coupling device 21 enables attachment and detachment of the working device 100. The coupling device 21 is provided at a front portion and/or rear portion of the travel vehicle body 11. FIGS. 1 and 2 illustrate an example where the coupling device 21 is provided at a rear portion of the travel vehicle body 11. This configuration allows the working vehicle 1 to, when the working device 100 is coupled to the coupling device 21, tow the coupled working device 100 as the travel vehicle body 11 travels.

The coupling device 21 is, for example, a position changer 21A configured to change the position of the working device 100 relative to the travel vehicle body 11, or a support configured to not change the positions of the working device 100 and the travel vehicle body 11 relative to each other. An example of the position changer 21A may be a raising/lowering device 21A1 configured to change the vertical position of the working device 100 relative to the travel vehicle body 11. The raising/lowering device 21A1 is, for example, a three-point linkage. The support is, for example, a swinging drawbar. Hereinafter, the working vehicle 1 will be described with reference to an example where the working vehicle 1 includes the raising/lowering device 21A1 (the position changer 21A) as an example of the coupling device 21.

As illustrated in FIG. 3, the raising/lowering device 21A1 includes a lift arm 22, a lower link 23, a top link 24, a lift rod 25, and a lift cylinder 26. The front end portion of the lift arm 22 is supported on an upper rear portion of the travel vehicle body 11 such that the front end portion of the lift arm 22 is allowed to swing upward or downward. The lift cylinder 26 is a hydraulic actuator (hydraulic cylinder) to be driven by hydraulic fluid. The lift cylinder 26 causes the lift arm 22 to swing (to be raised or lowered).

The front end portion of the lower link 23 is supported on a lower rear portion of the travel vehicle body 11 such that the front end portion of the lower link 23 is allowed to swing upward or downward. At a position above the lower link 23, the front end portion of the top link 24 is supported on a rear portion of the travel vehicle body 11 such that the front end portion of the top link 24 is allowed to swing upward or downward. The lift rod 25 couples the lift arm 22 and the lower link 23 with each other. A rear portion of the lower link 23, and a rear portion of the top link 24 have a hooked shape.

As the lift cylinder 26 is driven (extended or retracted), the lift arm 22 is raised or lowered, and the lower link 23 coupled to the lift arm 22 via the lift rod 25 is raised or lowered. This allows the working device 100 to swing upward or downward (to be raised or lowered) about a front portion of the lower link 23.

Although the present example embodiment is herein described with reference to an exemplary case where the working vehicle 1 is a tractor and the working device 100 is coupled to the coupling device 21, the working device 100 is not limited to an implement to be coupled to the travel vehicle body 11 via the coupling device 21. For example, the working device 100 may be a front loader attached to a front portion of the travel vehicle body 11.

The working device 100 may be any device that is provided to the working vehicle 1, and performs work. As such, the working device 100 need not necessarily be a device such as an implement that is detachably attachable to the travel vehicle body 11. For example, in a case where the working vehicle 1 is a combine, the working device 100 includes a mower to perform work such as mowing crops. In a case where the working vehicle 1 is a rice transplanter, the working device 100 includes a planter to plant seedlings. In a case where the working vehicle 1 is a backhoe or a compact track loader, the working device 100 may be, for example, an attachment.

The working vehicle 1 includes the traveling device 31. The traveling device 31 supports the travel vehicle body 11 such that the travel vehicle body 11 is allowed to travel. The traveling device 31 provides propelling force to the travel vehicle body 11 as the traveling device 31 is driven. The traveling device 31 includes a plurality of wheels 32. The wheels 32 include at least one front wheel 32F and at least one rear wheel 32R. A pair of front wheels 32F are provided in spaced relation in the width direction, and a pair of rear wheels 32R are provided in spaced relation in the width direction. Examples of the front wheel 32F and the rear wheel 32R may include tire-type wheels and crawler-type wheels.

As illustrated in FIG. 2, the traveling device 31 includes at least one axle 35 to support each of the wheels 32. The axle 35 includes an axle shaft 36 to support the wheels 32. According to the present example embodiment, the traveling device 31 includes a first axle 35F (front axle) to support the front wheel 32F, and a second axle 35R (rear axle) to support the rear wheel 32R.

The pair of front wheels 32F include a front wheel 32F1 (first front wheel), which is one front wheel 32F in the width direction, and a front wheel 32F2 (second front wheel), which is the other front wheel 32F. The front wheel 32F1 is supported on an axle shaft 36a (first front axle shaft) at the left of the first axle 35F. The front wheel 32F2 is supported on an axle shaft 36b (second front axle shaft) at the right of the first axle 35F.

The pair of rear wheels 32R include a rear wheel 32R1 (first rear wheel), which is one rear wheel 32R in the width direction, and a rear wheel 32R2 (second rear wheel), which is the other rear wheel 32R. The rear wheel 32R1 is supported on an axle shaft 36c (first rear axle shaft) at the left of the second axle 35R. The rear wheel 32R2 is supported on an axle shaft 36d (second rear axle shaft) at the right of the second axle 35R.

Although the traveling device 31 of the working vehicle 1 in FIGS. 1 and 2 has four wheels including the pair of front wheels 32F and the pair of rear wheels 32R, it may suffice that the traveling device 31 has a pair of wheels 32 spaced from each other in the width direction. Thus, the traveling device 31 may have three wheels 32, or may have five or more wheels 32.

The working vehicle 1 includes a power unit 41. The power unit 41 is configured to output power. The power unit 41 is configured to, for example, output power to drive the traveling device 31. The power unit 41 includes a prime mover 42, and a transmission 43. The prime mover 42 is provided in a front portion of the travel vehicle body 11. According to the present example embodiment, the transmission 43 defines a rear portion of the travel vehicle body 11.

In one example, the prime mover 42 is a diesel engine. In another example, the prime mover 42 may be another internal combustion engine such as a gasoline engine, an electric motor, or the like.

The transmission 43 allows speed stages to be changed to speed-change the power output from the prime mover 42. The transmission 43 thus makes it possible to change the propelling force provided to the traveling device 31, and also change the states of the traveling device 31 (between forward travel and reverse travel of the traveling device 31). The transmission 43 is coupled to the axle 35, and drives the wheels 32 via the axle 35.

The power unit 41 may be configured to output power to a device other than the traveling device 31 or to other equipment. For example, the power unit 41 may be configured to output power for driving the working device 100 in addition to the traveling device 31.

Specifically, the power unit 41 outputs power to a PTO shaft 44. The transmission 43 transmits the power from the prime mover 42 to the PTO shaft 44. The PTO shaft 44 is an output shaft to be connected to the working device 100 to drive the working device 100. The transmission 43 includes a PTO clutch to switch between transmission and interruption of power to the PTO shaft 44. The PTO clutch is, for example, a hydraulic clutch. The hydraulic clutch is engaged or disengaged to switch between transmission and interruption of power to the PTO shaft 44.

The power unit 41 outputs power to a hydraulic pump P. The hydraulic pump P is driven by power output from the prime mover 42, and delivers hydraulic fluid sucked from a hydraulic fluid tank 58. The hydraulic pump P supplies hydraulic fluid to various hydraulic equipment in the working vehicle 1.

As illustrated in FIG. 3, the working vehicle 1 includes a controller 61. The working vehicle also includes a storing device (memory and/or storage) 62.

The controller 61 includes one or more processors. The controller 61 is a controller for the working vehicle 1, and performs various controls related to the working vehicle 1. The controller 61 is communicably connected with various equipment or various devices installed in the working vehicle 1, via an in-vehicle network such as CAN, ISOBUS, LIN, or FlexRay.

For example, the controller 61 controls operation of hydraulic equipment by controlling one or more control valves 57 provided in the working vehicle 1, and changing how hydraulic fluid delivered by the hydraulic pump P flows. According to the present example embodiment, the working vehicle 1 includes a plurality of control valves 57. Each control valve 57 is, for example, a solenoid valve, and changes its valve position in accordance with a control signal output from the controller 61.

Specifically, the controller 61 controls operation of the lift cylinder 26 by controlling a control valve 57a (raising/lowering control valve) connected to the hydraulic pump P and the lift cylinder 26. In a case where the working device 100 includes a hydraulic actuator (working actuator), and performs work by means of the hydraulic actuator, the controller 61 controls operation of the working device 100 by controlling a control valve 57b (auxiliary control valve) connected to the hydraulic pump P and the working actuator.

The controller 61 includes one or more memories, various analog circuits, various digital circuits, and the like. The one or more memories store a software program to be executed by the one or more processors, and various data. The controller 61 may be configured to, by means of the one or more processors, read the software program from the one or more memories, and execute various processing based on the software program. The controller 61 may be configured to, by means of the one or more processors, execute various processing based on a predetermined logic circuit.

Examples of such a processor include a central processing unit (CPU), a graphics processing unit (GPU), a digital signal processor (DSP), a field programmable gate array (FPGA), and an application specific integrated circuit (ASIC).

The controller 61 may perform various processing by means of a plurality of physically separate processors cooperating with each other. That is, the controller 61 need not necessarily be configured as described above. In such a case, each of the processors is installed in the corresponding one of one or more computers that are physically separate from the working vehicle 1, and these processors are communicably connected via a network such as an in-vehicle network, a LAN, a WAN, or the Internet.

In an alternative configuration, the software program may be stored in the storing device 62 (nonvolatile memory such as an HDD or SSD) communicably connected with the controller 61, or in an external server connected via the above-mentioned network, and may be installed into the above-mentioned memory from the above-mentioned storing device or server.

As illustrated in FIG. 3, the working vehicle 1 includes a display 63. The display 63 includes, for example, a display unit 63a such as a liquid crystal display. The display 63 is controlled by the controller 61, and displays various information related to the working vehicle 1. The display 63 is located near the operator's seat 12.

As illustrated in FIG. 3, the working vehicle 1 includes an output interface 64. The output interface 64 provides a notification to the operator by outputting sound, light, or the like. An example of the output interface 64 may be a speaker that outputs sound, or a lamp or the like that outputs light. The output interface 64 provides a notification by means of audio or warning sound output from a speaker, or lighting or flashing of a lamp or the like. It may suffice that the output interface 64 is configured to provide a notification by outputting sound, light, or the like, and the display 63 may also function as the output interface 64.

As illustrated in FIG. 3, the working vehicle 1 includes one or more detectors 65. The detectors 65 detect the states of individual devices and/or individual equipment provided to the working vehicle 1. Each detector 65 is communicably connected to the controller 61, and outputs a detection result (detection signal) to the controller 61. The controller 61 is thus configured to, based on the detection signal output from the detector 65, acquire the states of individual devices and/or individual equipment. Examples of the detector 65 may include a rotation detector 65a, a vehicle speed detector 65b, a height detector 65c, and a fluid temperature detector 65d.

The rotation detector 65a is a sensor that detects the actual rotation speed of the prime mover 42. The vehicle speed detector 65b is a sensor that detects the travel speed (vehicle speed) of the travel vehicle body 11. The rotation detector 65a and the vehicle speed detector 65b are rotation sensors such as rotary encoders.

The height detector 65c is a sensor that detects the actual height of the raising/lowering device 21A1. Examples of the height detector 65c include an angle sensor (lift arm sensor) that detects the angle of the lift arm 22, and a cylinder stroke sensor (lift cylinder sensor) that detects the elongation (stroke) of the lift cylinder 26.

The fluid temperature detector 65d is a sensor that detects the temperature t of hydraulic fluid (fluid temperature). According to the present example embodiment, hydraulic fluid is also used as transmission oil for the transmission 43, and the fluid temperature detector 65d is provided inside the transmission 43.

As illustrated in FIG. 3, the working vehicle 1 includes an operating device 66. The operating device 66 includes one or more operation actuators 67 that accepts operations for individual devices and/or individual equipment provided to the working vehicle 1. Examples of the operation actuator 67 of the operating device 66 include an accelerator operation actuator 67a, a steering operation actuator 67b, a raising/lowering operation actuator 67c, a PTO operation actuator 67d, and a display operation actuator 67e.

The accelerator operation actuator 67a accepts an operation related to a target rotation speed for the prime mover 42. The accelerator operation actuator 67a includes, for example, a component such as an accelerator pedal or an accelerator lever. The accelerator operation actuator 67a detects an operation on such a component (such as the direction of operation and/or the amount of operation) by means of a sensor, and outputs an operation signal representing the detected operation to the controller 61. Based on the target rotation speed indicated by the operation signal from the accelerator operation actuator 67a, and on the actual rotation speed acquired from a detection result obtained from the rotation detector 65a, the controller 61 controls the prime mover 42 such that the actual rotation speed of the prime mover 42 reaches the target rotation speed.

The steering operation actuator 67b accepts an operation related to the steering angle and steering direction of the traveling device 31. The steering operation actuator 67b is, for example, a steering wheel. The steering wheel 67b is connected to a power steering mechanism via a rotational shaft. The power steering mechanism moves arms (knuckle arms) that change the direction of the front wheel 32F. This allows the steering direction of the front wheel 32F to be changed in response to operation of the steering wheel 67b.

The raising/lowering operation actuator 67c receives an operation related to a target height for the raising/lowering device 21A1. The raising/lowering operation actuator 67c includes, for example, a raising/lowering lever. The raising/lowering operation actuator 67c detects an operation on the raising/lowering lever (such as the direction of operation and/or the amount of operation) by means of a sensor, and outputs an operation signal representing the detected operation to the controller 61. The raising/lowering operation actuator 67c may include a separate raising/lowering switch in addition to the raising/lowering lever, and output an operation signal detected with the raising/lowering switch to the controller 61. In response to acquiring an operation signal from a raising/lowering component, the controller 61 controls the control valve 57a such that the actual height of the raising/lowering device 21A1 reaches the target height, based on a target height indicated by the operation signal and on the actual height acquired from a detection result obtained from the height detector 65c.

The PTO operation actuator 67d accepts an operation for enabling or disabling the rotation of the PTO shaft 44. The PTO operation actuator 67d is a push-type or seesaw-type switch, and outputs an operation signal to the controller 61 in response to the operation. In response to acquiring the operation signal from the PTO operation actuator 67d, the controller 61 controls, based on the operation signal, the enabling or disabling of the rotation of the PTO shaft 44. Specifically, the controller 61 controls the PTO clutch to switch between transmission and interruption of power to the PTO shaft 44.

The display operation actuator 67e accepts an operation on the display 63. The display operation actuator 67e is of a hardware type such as a physical switch, or a software type such as a display image displayed on the display unit 63a and on which an operation can be performed. According to the present example embodiment, the display 63 includes a physical hardware switch as the display operation actuator 67e. Thus, the display 63 according to the present example embodiment functions both as an input interface E that accepts an input of information in response to the display operation actuator 67e accepting an operation, and as an output interface that outputs information by displaying a screen on the display unit 63a.

Although the present example embodiment is herein described with reference to the case where the working vehicle 1 includes the operating device 66, the working vehicle 1 may include no operating device 66 in a case where the working vehicle 1 can be operated by remote control or in a case where the working vehicle 1 can be operated by automatic control. In such cases, it may suffice that the working vehicle 1 includes, instead of or in addition to the operating device 66, the input interface E that accepts an input of information, and outputs the accepted input information to the controller 61. An example of the input interface E may be a communicator that receives information transmitted from an external source.

The communicator is a communication interface, and includes a communication circuit. The communicator wirelessly communicates with an external server, a mobile terminal, a remote operation device, and/or the like via, for example, a communication standard such as the IEEE 802.11 series Wireless Fidelity (Wi-Fi) (registered trademark), a mobile phone network, or a data communication network. The communicator wirelessly communicates with a server and/or the like, and receives various information, data, signals, and the like. The communicator may also function as an output interface configured to output (transmit) various information, data, signals, and the like to a server or the like.

As illustrated in FIG. 3, the working vehicle 1 includes an attitude detector 68. The attitude detector 68 detects the attitude of the working vehicle 1 (the travel vehicle body 11). The attitude detector 68 is communicably connected with the controller 61, and outputs the detected attitude of the travel vehicle body 11 to the controller 61. Specifically, the attitude detector 68 detects three-dimensional inertial motion of the travel vehicle body 11 as the attitude of the travel vehicle body 11.

The attitude detector is, for example, an inertial measurement unit (IMU) including an acceleration sensor, a gyroscope, and the like. The attitude detector 68 detects, for example, tilt information (roll, pitch, and yaw angles) of the travel vehicle body 11.

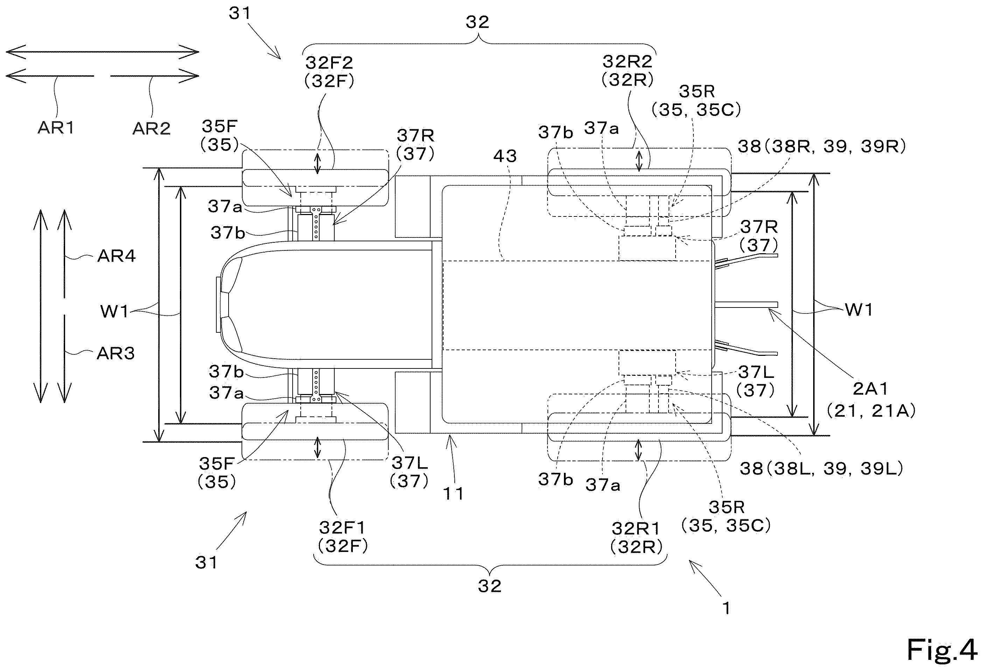

As illustrated in FIG. 4, the traveling device 31 has a track width W1 that can be changed. FIG. 4 illustrates changing of the track width W1 of the traveling device 31. The track width W1 is the length between the center in the width direction of one (left) wheel 32 of a pair of wheels 32 provided in the width direction, and the center in the width direction of the other (right) wheel 32. At least one of the first axle 35F or the second axle 35R allows the pair of wheels 32 to change their position in the width direction. This allows the traveling device 31 to change the track width W1.

Specifically, at least one of the first axle 35F or the second axle 35R includes at least one sliding mechanism 37 to support the axle shaft 36 such that the axle shaft 36 is slidable in the width direction. According to the present example embodiment, each of the first axle 35F and the second axle 35R includes a pair of sliding mechanisms 37. The sliding mechanism 37 is provided at one side and the other side in the width direction of each axle 35. Hereinafter, a sliding mechanism 37L, which is located at one (left) side in the width direction, will be sometimes referred to as "first sliding mechanism", and a sliding mechanism 37R, which is located at the other (right) side in the width direction, will be sometimes referred to as "second sliding mechanism."

The sliding mechanism 37 slidably supports the base end portion (the end portion opposite from the wheel 32) of the axle shaft 36. The sliding mechanism 37 includes an axle case 37a that supports the axle shaft 36, and a support case 37b that supports the axle case 37a. The axle case 37a rotatably supports the axle shaft 36. The support case 37b supports the axle case 37a such that the axle case 37a is slidable in the width direction. Thus, as the axle case 37a slides in the width direction and its position in the width direction relative to the axle case 37a changes, the axle shaft 36 moves in the width direction, which causes the track width W1 to change. The axle shaft 36 is connected at the base end portion to a changer 35C via a transmission mechanism such as a splined tubular shaft having spline grooves.

The working vehicle 1 includes the changer 35C to be driven to change the track width W1 of the traveling device 31. Specifically, at least one of the first axle 35F or the second axle 35R includes an actuator 38 (drive actuator) to be driven to change the track width W1, and defines or functions as the changer 35C.

According to the present example embodiment, the second axle 35R includes the drive actuator 38, and functions as the changer 35C. With the first axle 35F, the track width W1 of the front wheels 32F can be changed by manually changing the position where a fastener such as a bolt to couple the axle case 37a and the support case 37b is attached. The working vehicle 1 may include the first axle 35F (the changer 35C) to be driven to change the track width W1 of the front wheels 32F. The changer 35C will now be described in detail with reference to the second axle 35R as an example.

The drive actuator 38 is provided to each sliding mechanism 37. Thus, according to the present example embodiment, the changer 35C includes a pair of drive actuators 38. Each drive actuator 38 is driven to cause the axle case 37a to slide in the width direction, which causes the axle case 37a to change its position in the width direction relative to the support case 37b. Examples of the drive actuator 38 may include a hydraulic actuator 39 (such as a hydraulic cylinder or a hydraulic motor), and an electric actuator (such as an electric cylinder or an electric motor). The changer 35C will now be described with reference to an example where the drive actuator 38 is the hydraulic actuator 39.

According to the present example embodiment, the hydraulic actuator 39 is a hydraulic cylinder. The hydraulic cylinder couples the axle case 37a and the support case 37b via a bracket or the like, and causes the axle case 37a to slide in the width direction as the hydraulic cylinder extends or retracts.

The hydraulic cylinder is a double-acting type hydraulic cylinder including a first port that supplies the cylinder with hydraulic fluid to extend the piston rod out of the cylinder, and a second port that supplies the cylinder with hydraulic fluid to retract the piston rod into the cylinder. The hydraulic cylinder extends or retracts as hydraulic fluid is supplied to one of the first port or the second port and discharged from the other. Hereinafter, a hydraulic actuator 39L of the first sliding mechanism 37L will be sometimes referred to as "first hydraulic actuator", and a hydraulic actuator 39R of the second sliding mechanism 37R will be sometimes referred to as "second hydraulic actuator."

As illustrated in FIG. 3, the working vehicle 1 includes a track detector 65e. The track detector 65e is the detector 65 that detects length information for detecting the track width W1. The track detector 65e is provided to the changer 35C.

The track detector 65e is communicably connected with the controller 61, and outputs a detection result (detection signal) to the controller 61. This allows the controller 61 to acquire the track width W1, based on the detection signal output from the track detector 65e. The track detector 65e includes length detectors 65e1 and 65e2 each provided to the corresponding one of the sliding mechanisms 37. Hereinafter, the length detector 65e1 provided to the first sliding mechanism 37L will be sometimes referred to as "first length detector", and the length detector 65e2 provided to the second sliding mechanism 37R will be sometimes referred to as "second length detector."

The length detectors 65e1 and 65e2 are each configured to detect how much the wheel 32 has been moved by the drive actuator 38. According to the present example embodiment, the length detectors 65e1 and 65e2 are sensors that each detect the length (separation width w1 or w2) between the support case 37b and the wheel 32. According to the present example embodiment, the separation widths w1 and w2 each refer to the length from the outer end portion in the width direction of the support case 37b to the center in the width direction of the wheel 32.

For example, the length detectors 65e1 and 65e2 are sensors (link angle sensors) that each detect the angle of a linkage that couples the axle case 37a and the support case 37b. The link angle sensor is, for example, a potentiometer. The controller 61 acquires (calculates) the separation widths w1 and w2 based on detection results (link angles) from the link angle sensors.

The length detectors 65e1 and 65e2 need not necessarily be link angle sensors. For example, the length detectors 65e1 and 65e2 may be cylinder stroke sensors or the like that each detect the elongation (stroke) of the hydraulic actuator 39 (hydraulic cylinder).

Hereinafter, the separation width w1 of the first sliding mechanism 37L detected by the first length detector 65e1 will be sometimes referred to as "first separation width", and the separation width w2 of the second sliding mechanism 37R detected by the second length detector 65e2 will be sometimes referred to as "second separation width."

In response to acquiring, based on detection signals from the length detectors 65e1 and 65e2, the separation widths w1 and w2 of the corresponding sliding mechanisms 37, the controller 61 calculates the actual track width W1 (actual track width), based on a predetermined table, a calculation expression, or the like stored in the storing device 62, and on the acquired separation widths w1 and w2.

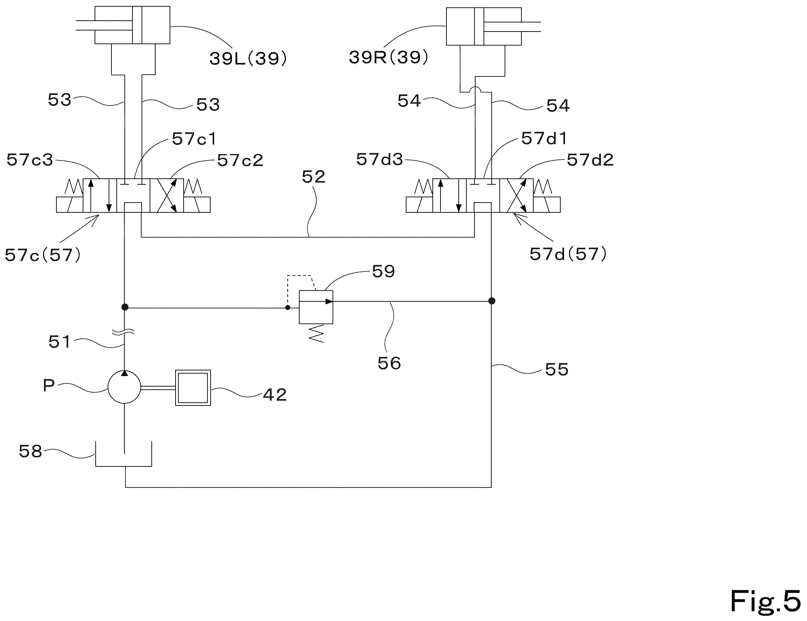

A hydraulic system related to the changer 35C will now be described. FIG. 5 illustrates the hydraulic system related to the changer 35C. As illustrated in FIG. 5, the hydraulic system of the working vehicle 1 includes the hydraulic pump P, a delivery fluid passage 51, a connection fluid passage 52, a first supply/discharge fluid passage 53, a second supply/discharge fluid passage 54, a discharge fluid passage 55, a first change control valve 57c, a second change control valve 57d, the first hydraulic actuator 39L, the second hydraulic actuator 39R, and the hydraulic fluid tank 58.

The delivery fluid passage 51 is a fluid passage connected to an output port of the hydraulic pump P and through which hydraulic fluid delivered by the hydraulic pump P is passed. In the example in FIG. 5, the delivery fluid passage 51 is connected to the first change control valve 57c.

The connection fluid passage 52 is a fluid passage that connects the first change control valve 57c and the second change control valve 57d. The connection fluid passage 52 allows the hydraulic fluid discharged from the first change control valve 57c to pass therethrough to the second change control valve 57d.

The first supply/discharge fluid passage 53 is a fluid passage that connects the first change control valve 57c and the first hydraulic actuator 39L. The first supply/discharge fluid passage 53 includes a fluid passage that connects the first change control valve 57c and the first port of the first hydraulic actuator 39L, and a fluid passage that connects the first change control valve 57c and the second port of the first hydraulic actuator 39L. The first supply/discharge fluid passage 53 allows the following hydraulic fluids to pass therethrough: the hydraulic fluid to be supplied from the first change control valve 57c to the first hydraulic actuator 39L; and the hydraulic fluid to be discharged from the first hydraulic actuator 39L to the first change control valve 57c.

The second supply/discharge fluid passage 54 is a fluid passage that connects the second change control valve 57d and the second hydraulic actuator 39R. The second supply/discharge fluid passage 54 includes a fluid passage that connects the second change control valve 57d and the first port of the second hydraulic actuator 39R, and a fluid passage that connects the second change control valve 57d and the second port of the second hydraulic actuator 39R. The second supply/discharge fluid passage 54 allows the following hydraulic fluids to pass therethrough: the hydraulic fluid to be supplied from the second change control valve 57d to the second hydraulic actuator 39R; and the hydraulic fluid to be discharged from the second hydraulic actuator 39R to the second change control valve 57d.

The discharge fluid passage 55 is a fluid passage connected to the hydraulic fluid tank 58 and through which hydraulic fluid is discharged to the hydraulic fluid tank 58. In the example in FIG. 5, the discharge fluid passage 55 is connected to the second change control valve 57d.

The first change control valve 57c is switchable between a neutral position 57c1, a first position 57c2, and a second position 57c3. The second change control valve 57d is switchable between a neutral position 57d1, a first position 57d2, and a second position 57d3. The first change control valve 57c and the second change control valve 57d, which are, for example, solenoid valves, are the control valves 57 that change their valve position in response to a control signal output from the controller 61. The first change control valve 57c and the second change control valve 57d are normally held in the neutral positions 57c1 and 57d1, respectively, by the elastic force of a spring.

The first change control valve 57c is the control valve 57 to control operation of the first hydraulic actuator 39L by changing the flow rate of the hydraulic fluid to be supplied to the first hydraulic actuator 39L and/or the flow rate of the hydraulic fluid to be discharged from the first hydraulic actuator 39L. When in the neutral position 57c1, the first change control valve 57c stops the supply of hydraulic fluid to the first hydraulic actuator 39L and the discharge of hydraulic fluid from the first hydraulic actuator 39L. When in the neutral position 57c1, the first change control valve 57c allows the hydraulic fluid supplied from the hydraulic pump P to pass therethrough to the connection fluid passage 52.

The first change control valve 57c in the first position 57c2 allows the hydraulic fluid from the hydraulic pump P to be supplied to the first port of the first hydraulic actuator 39L. At this time, the hydraulic fluid delivered from the hydraulic pump P is supplied to the first port via the delivery fluid passage 51, the first change control valve 57c, and the first supply/discharge fluid passage 53. The first change control valve 57c in the first position 57c2 allows the hydraulic fluid discharged from the second port of the first hydraulic actuator 39L to pass therethrough to the connection fluid passage 52. This causes the first hydraulic actuator 39L to extend, which in turn causes the axle case 37a of the first sliding mechanism 37L to move away from the support case 37b (in a leftward direction). Thus, the first rear axle shaft 36c moves outward (leftward) in the width direction. This results in increased first separation width w1, and increased track width W1.

The first change control valve 57c in the second position 57c3 allows the hydraulic fluid from the hydraulic pump P to be supplied to the second port of the first hydraulic actuator 39L. At this time, the hydraulic fluid delivered from the hydraulic pump P is supplied to the second port via the delivery fluid passage 51, the first change control valve 57c, and the first supply/discharge fluid passage 53. The first change control valve 57c in the second position 57c3 allows the hydraulic fluid discharged from the first port of the first hydraulic actuator 39L to pass therethrough to the connection fluid passage 52. This causes the first hydraulic actuator 39L to retract, which in turn causes the axle case 37a of the first sliding mechanism 37L to move toward the support case 37b (in a rightward direction). Thus, the first rear axle shaft 36c moves outward (rightward) in the width direction. This results in decreased first separation width w1, and decreased track width W1.

The second change control valve 57d is the control valve 57 to control operation of the second hydraulic actuator 39R by changing the flow rate of the hydraulic fluid to be supplied to the second hydraulic actuator 39R and/or the flow rate of the hydraulic fluid to be discharged from the second hydraulic actuator 39R. When in the neutral position 57d1, the second change control valve 57d stops the supply of hydraulic fluid to the second hydraulic actuator 39R and the discharge of hydraulic fluid from the second hydraulic actuator 39R. When in the neutral position 57d1, the second change control valve 57d allows the hydraulic fluid supplied from the connection fluid passage 52 to pass therethrough to the discharge fluid passage 55.

The second change control valve 57d in the first position 57d2 allows the hydraulic fluid from the hydraulic pump P to be supplied to the first port of the second hydraulic actuator 39R. At this time, the hydraulic fluid delivered from the hydraulic pump P is supplied to the first port via the delivery fluid passage 51, the first change control valve 57c, the connection fluid passage 52, the second change control valve 57d, and the second supply/discharge fluid passage 54. The second change control valve 57d in the first position 57d2 allows the hydraulic fluid discharged from the second port of the second hydraulic actuator 39R to pass therethrough to the discharge fluid passage 55. This causes the second hydraulic actuator 39R to extend, which in turn causes the axle case 37a of the second sliding mechanism 37R to move away from the support case 37b (in a rightward direction). Thus, the second rear axle shaft 36d moves outward (rightward) in the width direction. This results in increased second separation width w2, and increased track width W1.

The second change control valve 57d in the second position 57d3 allows the hydraulic fluid from the hydraulic pump P to be supplied to the second port of the second hydraulic actuator 39R. At this time, the hydraulic fluid delivered from the hydraulic pump P is supplied to the second port via the delivery fluid passage 51, the first change control valve 57c, the connection fluid passage 52, the second change control valve 57d, and the second supply/discharge fluid passage 54. The second change control valve 57d in the second position 57d3 allows the hydraulic fluid discharged from the first port of the second hydraulic actuator 39R to pass therethrough to the discharge fluid passage 55. This causes the second hydraulic actuator 39R to retract, which in turn causes the axle case 37a of the second sliding mechanism 37R to move toward the support case 37b (in a leftward direction). Thus, the second rear axle shaft 36d moves outward (leftward) in the width direction. This results in decreased second separation width w2, and decreased track width W1.

As illustrated in FIG. 5, a relief fluid passage 56 is connected between the delivery fluid passage 51 and the discharge fluid passage 55. A relief valve 59 is provided in the relief fluid passage 56. The relief fluid passage 56 is connected at one end to a portion (section) of the delivery fluid passage 51 between the hydraulic pump P and the first change control valve 57c. The relief fluid passage 56 is connected at the other end to a portion (section) of the discharge fluid passage 55 between the second change control valve 57d and the hydraulic fluid tank 58. When the pressure in the relief fluid passage 56 becomes equal to or greater than a predetermined pressure (equal to or greater than a set pressure), the relief valve 59 allows the hydraulic fluid in the delivery fluid passage 51 to pass therethrough to the discharge fluid passage 55.

In cases such as when an external force acts on the traveling device 31 in the width direction, or when an obstacle is present in the width direction of the traveling device 31, an attempt to drive the drive actuator 38 against the external force or the obstacle may result in the pressure in the relief fluid passage 56 becoming equal to or greater than a set pressure. This may cause the relief valve 59 to discharge hydraulic fluid to the discharge fluid passage 55.

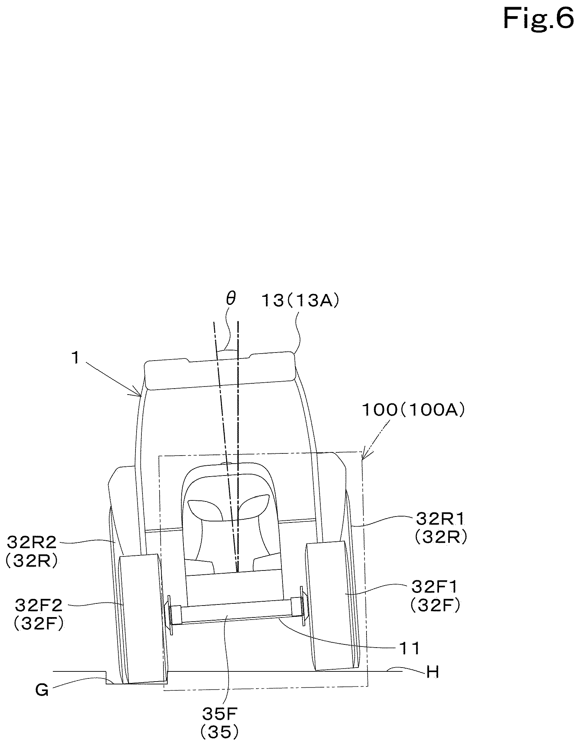

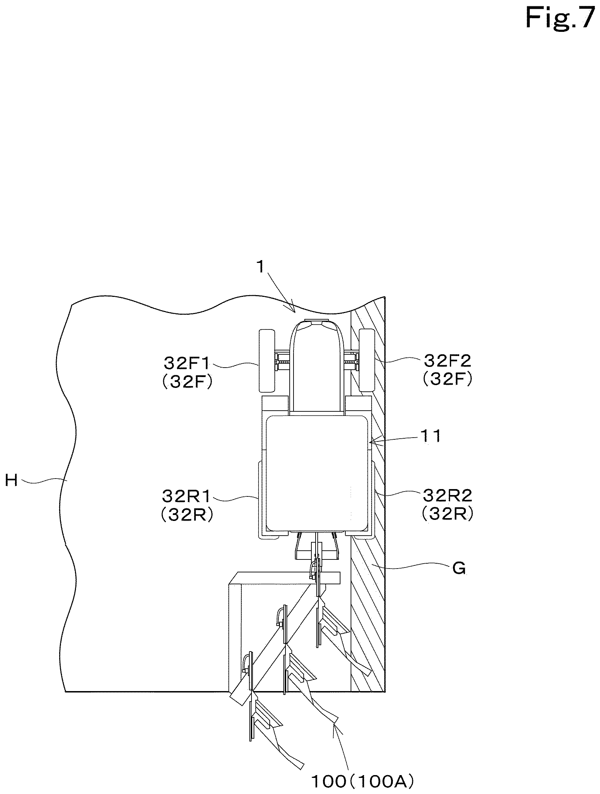

For example, in performing plowing with the reversible plow 100A coupled to the coupling device 21, the pressure in the relief fluid passage 56 may become equal to or greater than a set pressure. Specifically, when the working vehicle 1 travels to plow a furrow with the reversible plow 100A, the wheels 32 of the traveling device 31 that are located near a furrow G formed by the initial furrow creation or the immediately preceding furrow plowing are dropped into the furrow G (see FIGS. 6 and 7).

At this time, the travel vehicle body 11 tilts toward the furrow G with respect to the horizontal plane. As a result, the weight load from the travel vehicle body 11 may cause the load (external force) on the traveling device 31 to increase. Accordingly, in the example in FIGS. 6 and 7, an increased external force directed inward (leftward) in the width direction may act on the second front wheel 32F2 and the second rear wheel 32R2. Further, an increased external force directed outward (leftward) in the width direction may act on the first front wheel 32F1 and the first rear wheel 32R1.

Further, side surfaces of the furrow G are located outward and inward in the width direction of the wheels 32 dropped into the furrow G. This means that an obstacle is present on or near each side of the wheels 32 in the width direction of the traveling device 31. Thus, when the outer side of the wheels 32 dropped into the furrow G comes into contact with a side surface of the furrow G, an increased external force directed inward in the width direction may act on the wheels 32. More specifically, in the example in FIGS. 6 and 7, an increased external force directed inward (leftward) in the width direction may act on the second front wheel 32F2 and the second rear wheel 32R2.

When the inner side of the wheels 32 dropped into the furrow G comes into contact with a side surface of the furrow G, an increased external force directed outward in the width direction may act on the wheels 32. Thus, in the example in FIGS. 6 and 7, an increased external force directed outward (rightward) in the width direction may act on the second front wheel 32F2 and the second rear wheel 32R2.

Further, as illustrated in FIG. 7 and the like, the center in the width direction of the reversible plow 100A is offset with respect to the center in the width direction of the working vehicle 1. This may cause an external force to act on the traveling device 31 in the width direction as the working vehicle 1 travels and the bottom of the reversible plow 100A cuts through the soil of the agricultural field H (see FIG. 7). Further, the traveling device 31 is subjected to a reaction force generated as the bottom cuts through the soil of the agricultural field H, that is, an external force acting in a direction opposite to the direction in which the soil is cut through (the direction in which the cut soil is flipped over and cast). Thus, in the example in FIGS. 6 and 7, an increased external force directed inward (leftward) in the width direction may act on each wheel 32. In addition, an increased external force directed outward (leftward) in the width direction may act on the first front wheel 32F1 and the first rear wheel 32R1.

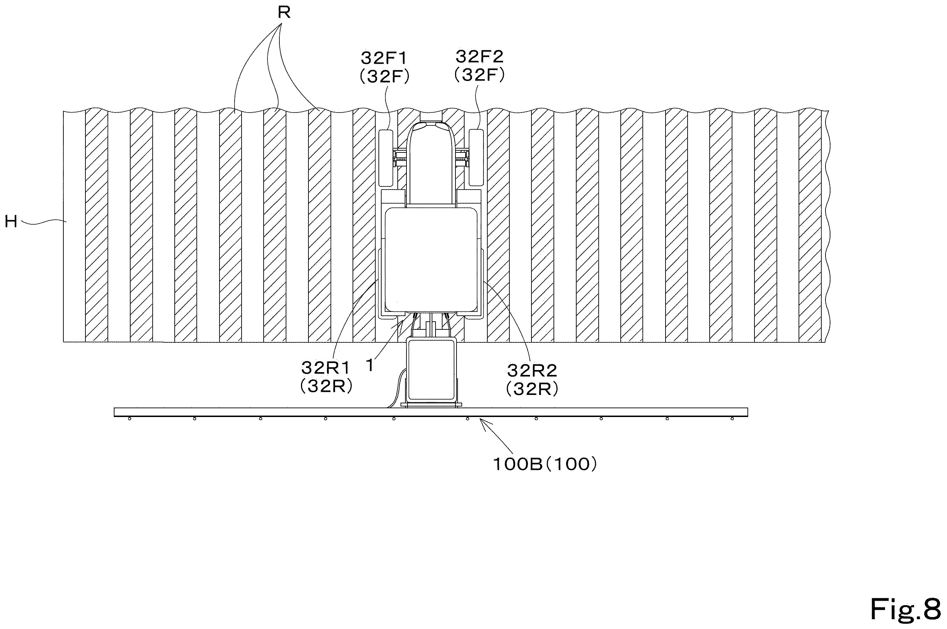

Another exemplary case when the pressure in the relief fluid passage 56 becomes equal to or greater than a set pressure may be when the working vehicle 1 performs work (e.g., spreading work or planting) on an agricultural field H provided with ridges R. Specifically, when the agricultural field H is provided with ridges R, the working vehicle 1 travels such that each wheel 32 of the traveling device 31 passes through the space between a ridge R and a ridge R (see FIG. 8).

FIG. 8 illustrates a case where a boom sprayer 100B is coupled to the coupling device 21 to perform spreading of chemicals on the agricultural field H provided with ridges R. As illustrated in FIG. 8, the side surfaces of a ridge R are located outward and inward in the width direction of each wheel 32. This means that obstacles are present in the width direction of the traveling device 31. Thus, when the outer side in the width direction of each wheel 32 comes into contact with a side surface of the ridge R, an increased external force directed inward in the width direction may act on each wheel 32. When the inner side in the width direction of each wheel 32 comes into contact with a side surface of the ridge R, an increased external force directed outward in the width direction may act on the wheel 32.

The controller 61 controls the drive actuator 38 such that the track width W1 reaches a target value W2 (target track width) (change control). The controller 61 performs a drive control based on a detection result obtained from the track detector 65e, such that the track width W1 reaches the target track width W2. According to the present example embodiment, the controller 61 controls each hydraulic actuator 39 in the change control, such that the first separation width w1 and the second separation width w2 become substantially equal and that the track width W1 satisfies the target track width W2.

According to the present example embodiment, the target track width W2 is defined as a predetermined range based on a set value W3. Thus, a target width w3 (target separation width) for each of the first separation width w1 and the second separation width w2 is also defined as a predetermined range based on the set value W3.

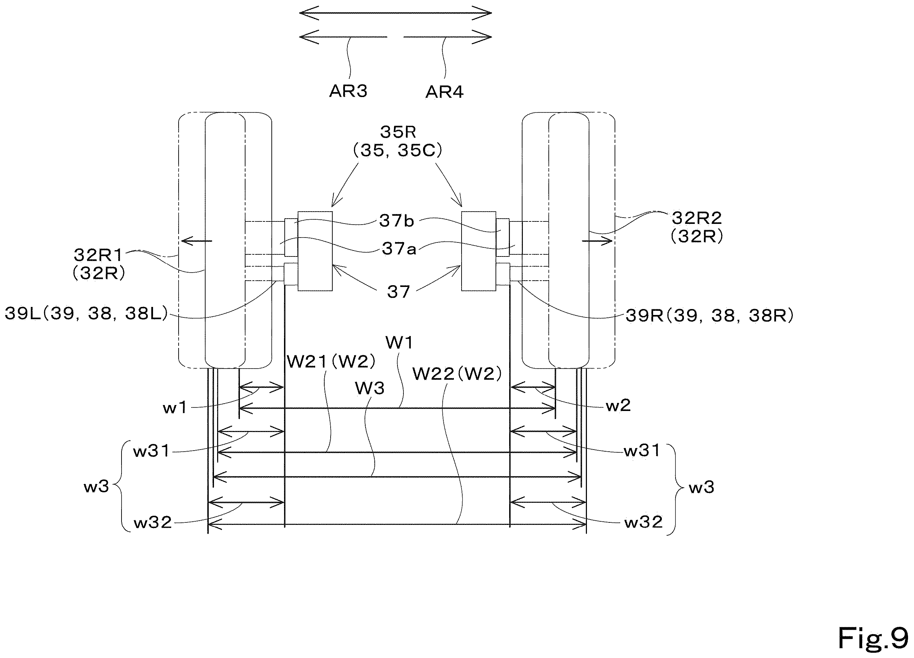

FIG. 9 illustrates the target value W2 for the track width W1. As illustrated in FIG. 9, the target track width W2 refers to a range that is defined, with reference to the target value W3, a target value W21 at the lower limit side of the range (lower limit target value) and a target value W22 at the upper limit side of the range (upper limit target value). The lower limit target value W21 represents the track width W21 that is smaller than the set value W3 by a predetermined value. The upper limit target value W22 represents the track width W21 that is larger than the set value W3 by a predetermined value.

The target separation width w3 refers to a range defined by a target width w31 at the lower limit side of the range (lower limit target width) that corresponds to the lower limit target value W21, and a target width w32 at the upper limit side of the range (upper limit target width) that corresponds to the upper limit target value W22.

The controller 61 acquires the set value w3 based on information accepted via the input interface E. As a result, the controller 61 acquires the target separation width w3 based on a predetermined table, a calculation expression, or the like stored in the storing device 62, and on the set value W3. Thus, it can be said that the controller 61 indirectly acquires the target value W2 by acquiring the target separation width w3. According to the present example embodiment, the display 63 displays, on the display unit 63a, a settings screen D1 to accept input of the set value W3, and the controller 61 acquires the set value W3 input on the settings screen D1.

In a case where the working vehicle 1 can be operated by remote control or can be operated by automatic control, a communicator as the input interface E may receive the set value W3 from an external source (e.g., a mobile terminal such as a smartphone or a PC operated by an operator, an administrator, or the like, a remote operation device, or a remote controller), and the controller 61 may acquire the received set value W3. Hereinafter, an exemplary case will be described in which the controller 61 acquires the set value W3 input on the settings screen D1.

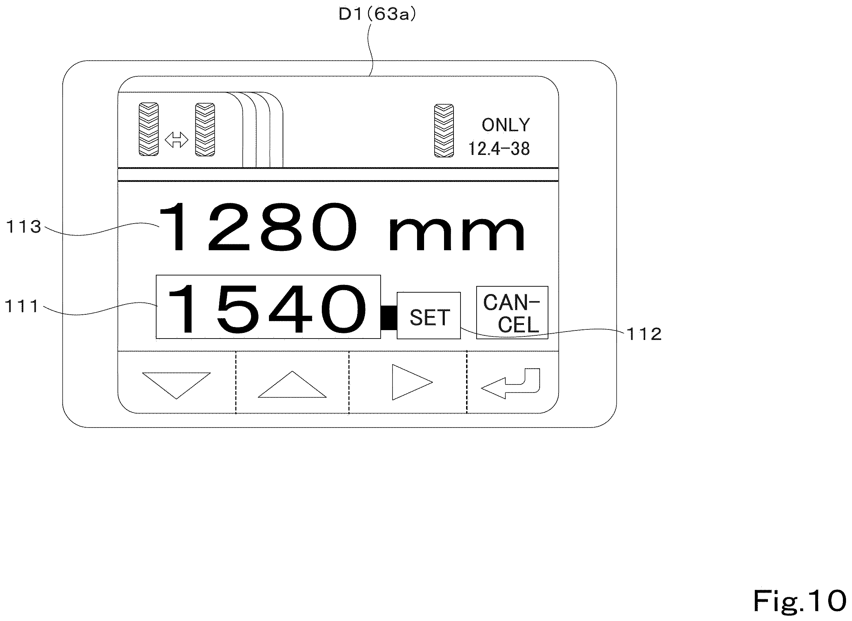

FIG. 10 illustrates an example of the settings screen D1. The settings screen D1 displays a track width input section 111, and a Set button 112. The track width input section 111, which is a display image for accepting input of the set value W3, accepts input of a given track width W1. The track width input section 111 may accept a specific set value W3 via operation on a numeric keypad, or may accept the set value W3 via operation on an increase button for increasing the track width W1 in steps and a decrease button for decreasing the track width W1 in steps.

The Set button 112 accepts an operation (confirmation operation) to confirm the set value w3 input and accepted via the track width input section 111. When the Set button 112 is operated, the controller 61 acquires the set value W3 input and accepted via the track width input section 111, and causes the set value w3 to be retained in the memory. At this time, when the set value W3 input and accepted via the track width input section 111 upon operation on the Set button 112 differs from the set value W3 retained in the memory, the controller 61 overwrites the set value W3 retained in the memory. As a result, the set value W3 is changed. When the set value W3 input and accepted via the track width input section 111 upon the confirmation operation is the same as the set value W3 retained in the memory, the controller 61 does not overwrite the set value W3. Thus, the set value W3 is not changed.

The settings screen D1 may display, in addition to the track width input section 111 and the Set button 112, a track width display section 113 that displays the actual track width W1. The settings screen D1 described above with reference to the example in FIG. 10 is illustrative rather than limitative.

The controller 61 switches to a first mode when the set value W3 is changed. The controller 61 in the first mode performs a change control such that the actual track width W1 satisfies the target track width W2 corresponding to the changed set value W3. The controller 61 in the first mode switches to a second mode in response to the actual track width W1 satisfying the target track width W2. The controller 61 in the second mode performs a change control to keep the actual track width W1 at the target track width W2.

In response to the actual track width W1 satisfying the target track width W2, that is, when the controller 61 in the first mode switches to the second mode, the controller 61 controls the output interface 64, and causes the output interface 64 to output a notification indicating that the actual track width W1 satisfies the target track width W2. For example, in a case where the output interface 64 is a speaker, the speaker outputs a beep sound.

In the change control, the controller 61 controls each drive actuator 38 such that the first separation width w1 and the second separation width w2 become equal to or greater than the lower limit target width w31 and equal to or less than the upper limit target width w32. More specifically, when the first separation width w1 is less than the lower limit target width w31, the controller 61 moves the first change control valve 57c to the first position 57c2 to cause the first hydraulic actuator 39L to extend, thus increasing the first separation width w1 such that first separation width w1 satisfies the target separation width w3. When the first separation width w1 is greater than the upper limit target width w32, the controller 61 moves the first change control valve 57c to the second position 57c3 to cause the first hydraulic actuator 39L to retract, thus decreasing the first separation width w1 such that first separation width w1 satisfies the target separation width w3.

When the second separation width w2 is less than the lower limit target width w31, the controller 61 moves the second change control valve 57d to the first position 57d2 to cause the second hydraulic actuator 39R to extend, thus increasing the second separation width w2 such that second separation width w2 satisfies the target separation width w3. When the second separation width w2 is greater than the upper limit target width w32, the controller 61 moves the second change control valve 57d to the second position 57d3 to cause the second hydraulic actuator 39R to retract, thus decreasing the second separation width w2 such that second separation width w2 satisfies the target separation width w3.

As described above, through the change control, the controller 61 controls the first change control valve 57c and the second change control valve 57d to cause the hydraulic cylinders to extend or retract, thus controlling the changer 35C such that the track width W1 reaches the target track width W2.

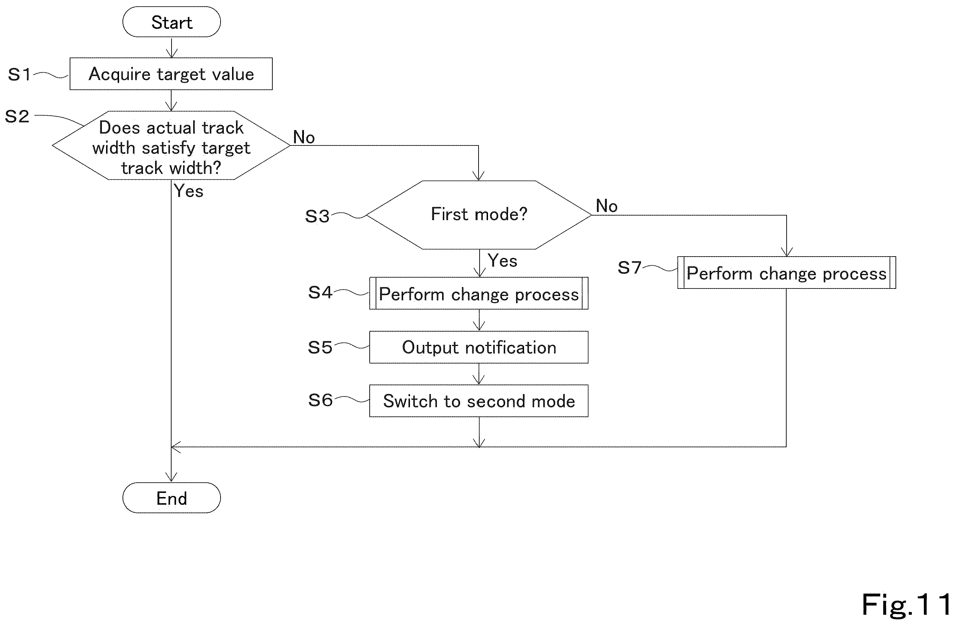

FIG. 11 illustrates control performed by the controller 61 in the first mode and the second mode. Processing performed by the controller 61 in the first mode and the second mode will now be described with reference to FIG. 11.

First, based on the set value W3 retained in the memory, the controller 61 acquires the target value W2 (S1). According to the present example embodiment, the controller 61 acquires the target separation width w3 based on the set value W3.

In response to acquiring the target value W2 (S1), the controller 61 determines whether the actual track width W1 satisfies the target track width W2 (S2). According to the present example embodiment, the controller 61 determines that the actual track width W1 satisfies the target track width W2 when the first separation width w1 satisfies the target separation width w3 and the second separation width w2 satisfies the target separation width w3. The controller 61 determines that the actual track width W1 does not satisfy the target track width W2 when the first separation width w1 does not satisfy the target separation width w3 and/or when the second separation width w2 does not satisfy the target separation width w3.

When the controller 61 determines that the actual track width W1 satisfies the target track width W2 (S2: Yes), the controller 61 maintains the first change control valve 57c and the second change control valve 57d at the neutral position 57c1, and ends the series of processing steps without driving the drive actuators 38.

When the controller 61 determines that the actual track width W1 does not satisfy the target track width W2 (S2: No), the controller 61 checks the current mode to confirm whether the current mode is the first mode (S3). In response to confirming that the current mode is the first mode (S3: Yes), the controller 61 performs a change process related to a change control (S4). When the change process ends, the controller 61 controls the output interface 64 such that the output interface 64 outputs a notification (S5). At this time, the output interface 64 outputs a notification indicating that the actual track width W1 satisfies the target track width W2. In response to the output interface 64 outputting the notification (S5), the controller 61 switches from the first mode to the second mode (S6), and ends the series of processing steps.

In response to confirming at step S3 that the current mode is the second mode (S3: No), the controller 61 performs a change process related to a change control (S7). Upon ending the change process, the controller 61 ends the series of processing steps.

As described above, when the set value W3 is changed, the controller 61 in the first mode performs a change control in a change process, and the actual track width W1 is changed to a target track width W2 that has been changed. The controller 61 in the second mode performs a change control in a change process to maintain the actual track width W1 at the target track width W2.

A change control will now be described in detail. The controller 61 may perform, in the first mode and the second mode, substantially the same change control or different change controls. For example, the controller 61 performs a first change control as a change control in at least one of the first mode or the second mode.

The first change control is a control in which, until the track width W1 (actual track width) satisfies the target value W2 (target track width), the controller 61 repeats the drive control, which is a control to drive the drive actuator 38 such that the actual track width W1 reaches the target track width W2. The controller 61 preferably performs the first change control as a change control to be performed in at least the second mode. The controller 61 may perform the first change control as a change control to be performed in the first mode.

Hereinafter, an exemplary case will be described in which the controller 61 in the second mode performs the first change control as a change control. In this case, the controller 61 in the second mode performs a first change process to perform the first change control.

The controller 61 performs the drive control and an idle control alternately from when the first change control is started to when the actual track width W1 satisfies the target track width W2. According to the present example embodiment, the controller 61 performs the drive control and the idle control alternately from when the first change control is started to when the first separation width w1 satisfies the target separation width w3 and the second separation width w2 satisfies the target separation width w3. Thus, the controller 61 performs the drive control and the idle control alternately in cases such as when an external force acts on the traveling device 31 in the width direction, or when, due to the presence of an obstacle in the width direction of the traveling device 31, a single execution of the drive control does not allow the track width W1 to change to the target track width W2.

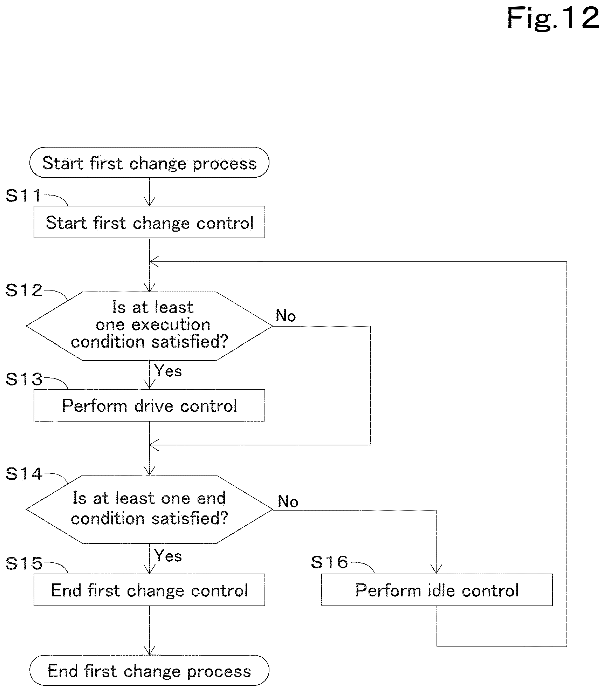

FIG. 12 illustrates an example of the procedure for the first change process. In the example of the first change process in FIG. 12, the controller 61 starts the first change control (S11), and determines whether at least one predetermined execution condition is satisfied (S12). The execution condition represents a condition for determining whether to perform the drive control in the first change control. The execution condition includes, for example, a condition that the actual rotation speed of the prime mover 42 is equal to or greater than a predetermined rotation speed (first execution condition), and a condition that the current vehicle speed is equal to or greater than a predetermined speed (second execution condition). The execution condition is pre-stored in the storing device 62. The controller 61 determines whether the execution condition is satisfied, based on the actual rotation speed acquired from a detection result obtained from the rotation detector 65a and on the vehicle speed acquired from a detection result obtained from the vehicle speed detector 65b. The execution condition mentioned above is an illustrative example. The execution condition does not necessarily include the first execution condition and the second execution condition but may include one of the first execution condition or the second execution condition.

When the controller 61 determines that the execution condition is satisfied (S12: Yes), the controller 61 performs the drive control once (S13). When the controller 61 determines that the execution condition is not satisfied (S12: No), or after the controller 61 performs the drive control (S13), the controller 61 determines whether at least one predetermined end condition is satisfied (S14). The end condition represents a condition for determining whether to end the first change control. The end condition includes, for example, a condition that the actual track width W1 satisfies the target track width W2 (first end condition), and a condition that the set value W3 has been changed (second end condition).

Based on detection results obtained from the length detectors 65e1 and 65e2, the controller 61 acquires the first separation width w1 and the second separation width w2, and determines whether the first end condition is satisfied. The controller 61 determines that the set value W3 has been changed and the second end condition is satisfied, when the input interface E has accepted input of a changed set value W3 and the set value W3 retained in the memory has been changed. The end condition mentioned above is an illustrative example. The end condition need not necessarily include the first end condition and the second end condition.

When the controller 61 determines that the end condition is satisfied (S14: Yes), the controller 61 ends the first change control (S15), and ends the first change process. When the controller 61 determines that the end condition is not satisfied (S14: No), the controller 61 performs the idle control (S16). Upon performing the idle control (S16), the controller 61 returns to step S12.

As described above, even when the set value W3 has been changed, the controller 61 performs the drive control and the idle control alternately in the first change control, until the end condition is satisfied (at least until the actual track width W1 satisfies the target track width W2).

The drive control will now be described in detail. The drive control is a control to drive the drive actuator 38 such that the actual track width W1 reaches the target track width W2. According to the present example embodiment, in the drive control, the controller 61 drives the pair of drive actuators 38. At this time, the controller 61 does not drive both of the pair of drive actuators 38 simultaneously. That is, in the drive control, the controller 61 controls the drive of the first hydraulic actuator 39L, and the drive of the second hydraulic actuator 39R independently at different timings. In other words, in the drive control, the controller 61 changes the control of the first separation width w1 and the control of the second separation width w2 at different timings. Accordingly, in the drive control, the controller 61 drives one drive actuator 38 of the pair of drive actuators 38, and after the drive of the one drive actuator 38 is stopped, drives the other drive actuator 38.

Thus, in the drive control, the controller 61 does not simultaneously change both of the first change control valve 57c and the second change control valve 57d from the neutral positions 57c1 and 57d1 to other positions (the first positions 57c2 and 57d2 or the second positions 57c3 and 57d3), respectively. According to the present example embodiment, in the change control, when the controller 61 has switched at least one of the first change control valve 57c or the second change control valve 57d from the neutral position 57c1 or 57d1 to another position, the controller 61 maintains the other change control valve at the neutral position 57c1 or 57d1.

The controller 61 does not drive each drive actuator 38 for more than a set time during a single execution of the drive control. The set time is predefined in the storing device 62. The set time is, for example, 5 seconds, and may be editable as appropriate based on information accepted via the input interface E.

A single execution of the drive control will now be described with reference to an exemplary case where, in the drive control, the controller 61 controls the first hydraulic actuator 39L first and then controls the second hydraulic actuator 39R.

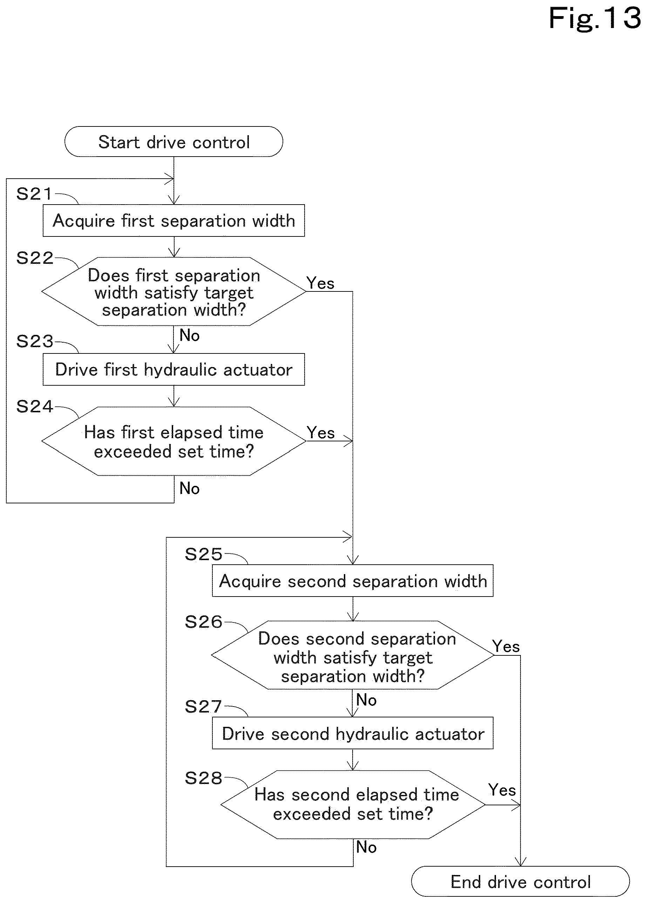

FIG. 13 illustrates an example of a single execution of the drive control. As illustrated in FIG. 13, the controller 61 acquires the first separation width w1 based on a detection result obtained from the first length detector 65e1 (S21). Upon acquiring the first separation width w1 (S21), the controller 61 determines whether the first separation width w1 satisfies the target separation width w3 corresponding to the set value W3 retained in the memory (S22).

When the first separation width w1 does not satisfy the target separation width w3 (S22: No), the controller 61 drives the first hydraulic actuator 39L such that the first separation width w1 satisfies the target separation width w3 (S23). At this time, after driving the first hydraulic actuator 39L, the controller 61 counts the drive time of the first hydraulic actuator 39L, that is, how long the first hydraulic actuator 39L has been driven. For example, the controller 61 counts, as the drive time of the first hydraulic actuator 39L, the elapsed time (a first elapsed time) for which the first change control valve 57c has been in a position other than the neutral position 57c1 after being moved from the neutral position 57c1. The controller 61 continues steps S21 to S24 until the first separation width w1 satisfies the target separation width w3 (S22: Yes), or until the first elapsed time exceeds the set time (S24: Yes).

Thus, when the first separation width w1 does not satisfy the target separation width w3 and the first elapsed time is equal to or less than the set time (S22: No, S24: No), the controller 61 repeats step S23, and moves the first change control valve 57c from the neutral position 57c1 to the first position 57c2 or the second position 57c3 to drive the first hydraulic actuator 39L. When the first separation width w1 satisfies the target separation width w3 (S22: Yes) or when the first elapsed time exceeds the set time (S24: Yes), the controller 61 returns the first change control valve 57c to the neutral position 57c1. At this time, the controller 61 returns the first elapsed time to zero.

When the first separation width w1 satisfies the target separation width w3 (S22: Yes) or when the first elapsed time exceeds the set time (S24: Yes), the controller 61 acquires the second separation width w2 based on a detection result obtained from the second length detector 65e2 (S25). Upon acquiring the second separation width w2 (S25), the controller 61 determines whether the second separation width w2 satisfies the target separation width w3 corresponding to the set value W3 retained in the memory (S26).

When the second separation width w2 does not satisfy the target separation width w3 (S26: No), the controller 61 drives the second hydraulic actuator 39R such that the second separation width w2 satisfies the target separation width w3 (S27). At this time, after driving the second hydraulic actuator 39R, the controller 61 counts the drive time of the second hydraulic actuator 39R, that is, how long the second hydraulic actuator 39R has been driven. For example, the controller 61 counts, as the drive time of the second hydraulic actuator 39R, the elapsed time (a second elapsed time) for which the second change control valve 57d has been in a position other than the neutral position 57d1 after being moved from the neutral position 57d1. The controller 61 continues steps S25 to S28 until the second separation width w2 satisfies the target separation width w3 (S26: Yes), or until the second elapsed time exceeds the set time (S28: Yes).

Thus, when the second separation width w2 does not satisfy the target separation width w3 and the second elapsed time is equal to or less than the set time (S26: No, S28: No), the controller 61 repeats step S27, and moves the second change control valve 57d from the neutral position 57d1 to the first position 57d2 or the second position 57d3 to drive the second hydraulic actuator 39R. When the second separation width w2 satisfies the target separation width w3 (S26: Yes) or when the second elapsed time exceeds the set time (S28: Yes), the controller 61 returns the second change control valve 57d to the neutral position 57d1, and ends the drive control. At this time, the controller 61 returns the second elapsed time to zero.

As described above, in the drive control, the controller 61 performs control of the first hydraulic actuator 39L before performing control of the second hydraulic actuator 39R. Thus, the controller 61 performs both control of the first hydraulic actuator 39L and control of the second hydraulic actuator 39R in a single execution of the drive control. That is, even when it is not possible by a single execution of the drive control to make both the first separation width w1 and the second separation width w2 satisfy the target separation width w3, the time required for the single execution of the drive control (i.e., the sum of the first elapsed time and the second elapsed time) is equal to or less than twice the set time.

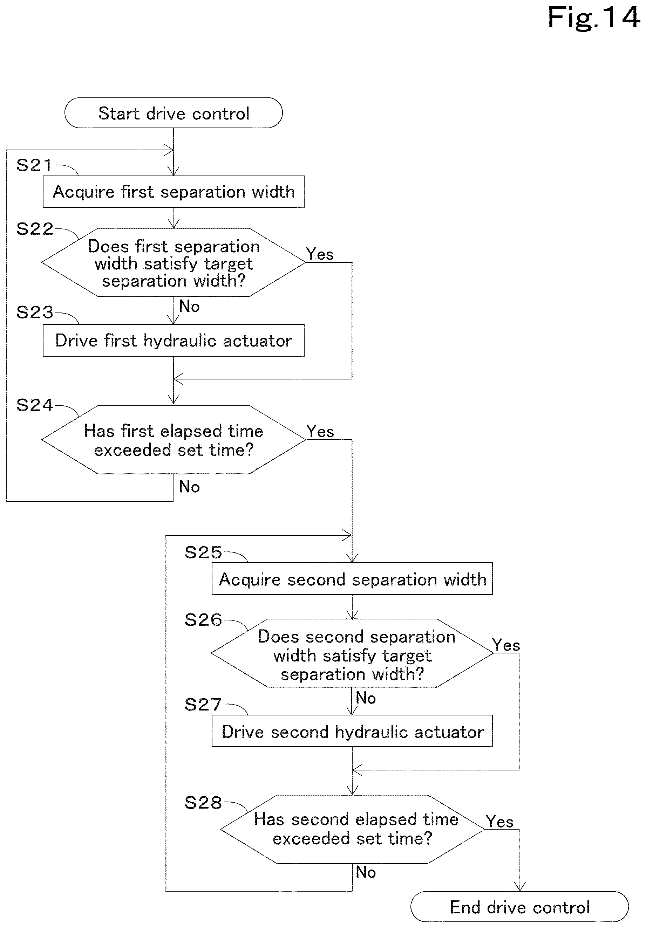

Although the above-mentioned example is directed to the case where, in the drive control, the controller 61 performs control of the first hydraulic actuator 39L before performing control of the second hydraulic actuator 39R, the controller 61 may perform control of the second hydraulic actuator 39R before performing control of the first hydraulic actuator 39L. Further, it may suffice that, during a single execution of the drive control, the controller 61 does not drive each drive actuator 38 for more than the set time. The controller 61 may perform, for example, a drive control according to a variation illustrated in FIG. 14.

According to the variation in FIG. 14, the controller 61 continues to perform steps S21 to S24 until the first elapsed time exceeds the set time (S24: Yes). Specifically, unlike the drive control described above with reference to FIG. 13, when the controller 61 determines at step S22 that the first separation width w1 satisfies the target separation width w3 (S22: Yes), the controller 61 proceeds to step S24.

Thus, when the first separation width w1 does not satisfy the target separation width w3, and the first elapsed time is equal to or less than the set time (S22: No, S24: No), the controller 61 continues to perform the control of the first hydraulic actuator 39L. When the first elapsed time exceeds the set time (S24: Yes), the controller 61 ends the control of the first hydraulic actuator 39L, and returns the first change control valve 57c to the neutral position 57c1.

According to the variation in FIG. 14, the controller 61 continues to perform steps S25 to S28 until the second elapsed time exceeds the set time (S26: Yes). Specifically, unlike the drive control described above with reference to FIG. 13, when the controller 61 determines at step S26 that the second separation width w2 satisfies the target separation width w3 (S26: Yes), the controller 61 proceeds to step S28.

Thus, when the second separation width w2 does not satisfy the target separation width w3, and the second elapsed time is equal to or less than the set time (S26: No, S28: No), the controller 61 continues to perform the control of the second hydraulic actuator 39R. When the second elapsed time exceeds the set time (S28: Yes), the controller 61 ends the control of the second hydraulic actuator 39R, and returns the second change control valve 57d to the neutral position 57d1.

The foregoing description is directed to the case where, in each of the drive controls described above with reference to FIGS. 13 and 14, the controller 61 does not simultaneously drive both of the pair of drive actuators 38. However, the controller 61 may simultaneously drive both of the pair of drive actuators 38.

The idle control will now be described. The idle control is a control to not drive the drive actuator 38 for an idle time T. In the idle control, the controller 61 maintains both the first change control valve 57c and the second change control valve 57d in the neutral position 57c1 to stop the supply of hydraulic fluid to each hydraulic cylinder and the discharge of hydraulic fluid from each hydraulic cylinder.

The idle time T is predefined (prestored) in the storing device 62. The controller 61 acquires the idle time T stored in the storing device 62. The idle time T is defined based on, for example, a fluid temperature t at which the hydraulic actuator 39 is driven. For example, the idle time T is set to 20 seconds or the like, and may be editable as appropriate based on information accepted via the input interface E.

The idle time T is preferably defined based on how the fluid temperature t tends to rise when the relief fluid passage 56 has become equal to or greater than a set pressure and the relief valve 59 is thus allowing the hydraulic fluid in the delivery fluid passage 51 to pass therethrough to the discharge fluid passage 55.

Specifically, the idle time T is defined such that the idle time T is longer when a rise Δt in the fluid temperature t per unit time is a second rise Δt2 than when the rise Δt in the fluid temperature per unit time is a first rise Δt1. The second rise Δt2 is greater than the first rise Δt1. For example, the idle time T is defined such that the idle time T increases as a rise Δt in temperature increases.

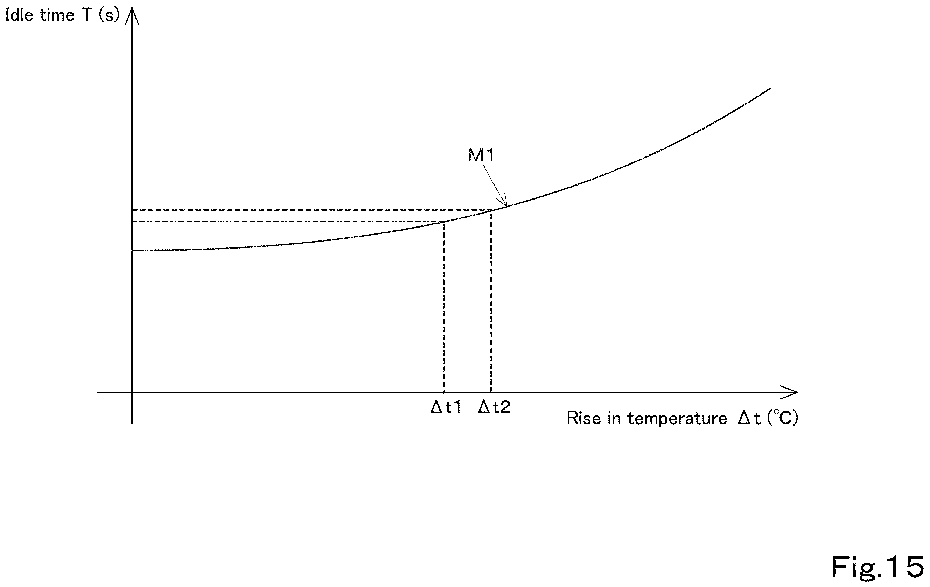

FIG. 15 is a first map M1 (graph) representing the relationship between a rise Δt in temperature and the idle time T. In the first map M1 in FIG. 15, the horizontal axis represents a rise Δt in temperature, and the vertical axis represents the idle time T. In the first map M1 in FIG. 15, the idle time T changes such that the idle time T increases along a downwardly convex curve as the rise Δt in temperature increases. The first map M1 is prestored in, for example, the storing device 62.

The controller 61 acquires the current fluid temperature t based on a detection result obtained from the fluid temperature detector 65d, and calculates a rise Δt in temperature per unit time (e.g., 30 seconds or 60 seconds). Upon calculating the rise Δt in temperature, the controller 61 acquires the idle time T corresponding to the rise Δt in temperature, based on the first map M1 stored in the storing device 62.

The first map M1 in FIG. 15 is an illustrative example. The first map M1 may be such that, as a rise Δt in temperature increases, the idle time T increases along an upwardly convex curve, or increases along a substantially straight line.

Although the above-mentioned example is directed to the case where the idle time T is defined based on how the fluid temperature t tends to rise, the idle time T may be defined based on the current fluid temperature t. In such a case, the idle time T is defined such that the idle time T is longer when the fluid temperature t is a second fluid temperature t2 than when the fluid temperature t is a first fluid temperature t1. The second fluid temperature t2 is higher than the first fluid temperature t1. For example, the idle time T is defined such that the idle time T increases as the fluid temperature t increases.

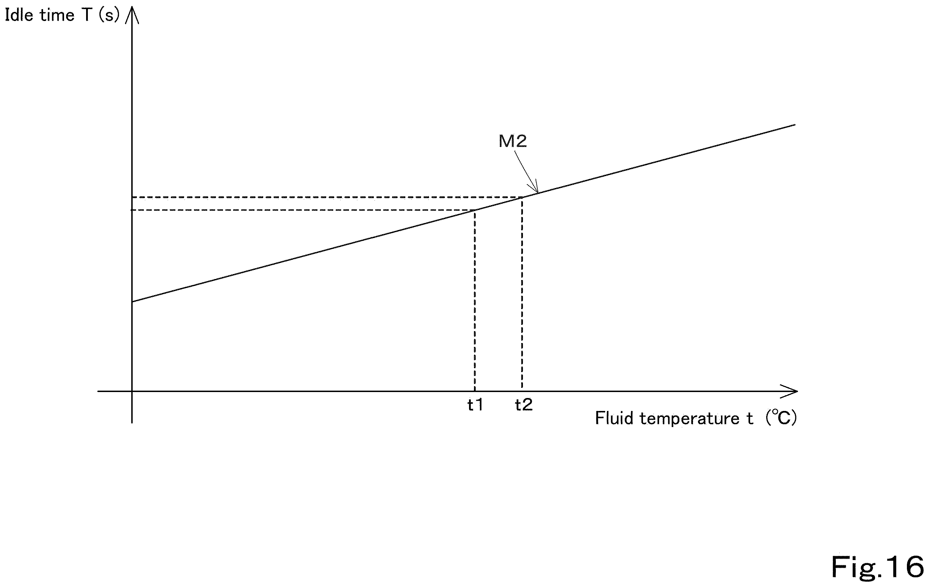

FIG. 16 is a second map M2 (graph) representing the relationship between the fluid temperature t and the idle time T. In the second map M2 in FIG. 16, the horizontal axis represents the fluid temperature t, and the vertical axis represents the idle time T. In the second map M2 in FIG. 16, the idle time T changes such that the idle time T increases along a substantially straight line as the fluid temperature t increases. The second map M2 is prestored in, for example, the storing device 62. The controller 61 acquires the current fluid temperature t based on a detection result obtained from the fluid temperature detector 65d, and acquires, from the second map M2, the idle time T corresponding to the fluid temperature t.

The second map M2 may be such that, as the fluid temperature t increases, the idle time T increases along an upwardly convex curve, or increases along a downwardly convex curve.

The idle time T may be defined based on a temperature difference dt (difference) between a predetermined upper limit temperature (a first threshold described later) and the current fluid temperature t. The temperature difference dt is calculated by subtracting the current fluid temperature t from the upper limit temperature. At this time, the idle time T is defined such that the idle time T is longer when the temperature difference dt is a second temperature difference dt2 than when the temperature difference dt is a first temperature difference dt1. The second temperature difference dt2 is less than the first temperature difference dt1. For example, the idle time T is defined such that the idle time T increases as the temperature difference dt decreases.

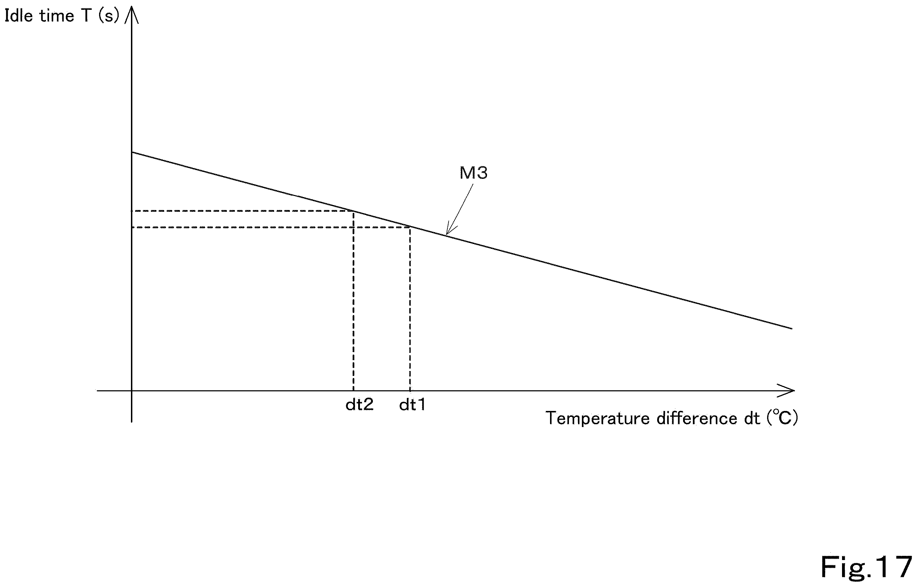

FIG. 17 is a third map M3 (graph) representing the relationship between the temperature difference dt and the idle time T. In the third map M3 in FIG. 17, the horizontal axis represents the temperature difference dt, and the vertical axis represents the idle time T. In the third map M3 in FIG. 17, the idle time T changes such that the idle time T decreases proportionately along a substantially straight line as the temperature difference dt increases. The third map M3 is prestored in, for example, the storing device 62. In such a case, the controller 61 acquires the current fluid temperature t based on a detection result obtained from the fluid temperature detector 65d, and acquires, from the third map M3, the idle time T corresponding to the difference obtained by subtracting the fluid temperature t from the upper limit temperature.

The third map M3 in FIG. 17 is an illustrative example. The third map M3 may be such that, as the temperature difference dt increases, the idle time T decreases along an upwardly convex curve, or decreases along a downwardly convex curve.

Although the foregoing description is directed to the example where the end condition includes the first end condition and the second end condition, the end condition may include another condition. For example, the controller 61 may end the first change control when a third end condition is satisfied, in addition to when the first end condition or the second end condition is satisfied.

The controller 61 ends the first change control when the number of times the controller 61 has performed the drive control reaches a set number N (set number of times) during the period from when the first change control is started to when the track width W1 (actual track width) satisfies the target value W2 (target track width) (third end condition). Specifically, upon starting the first change control in the first change process, the controller 61 counts the number of times (the number of executions) that the controller 61 has performed the drive control. That is, the controller 61 counts the number of executions by incrementing a counter (execution counter) provided in the memory each time the controller 61 performs the drive control once at step S13.

The set number N is predefined (prestored) in the storing device 62. The controller 61 acquires the set number N stored in the storing device 62. The set number N is, for example, 60, and may be editable as appropriate based on information accepted via the input interface E.

The set number N may be defined based on a reference travel speed BV (reference speed) of the travel vehicle body 11, and on a reference travel distance BD (reference distance). The set number N is calculated by first calculating a reference time BT by dividing the reference distance BD by the reference speed BV (BT = BD/BV), and then dividing the calculated reference time BT by the duration TR of one cycle (one period) including the drive control and the idle control in the first change control (N = BT/TR). By way of example, for a case where the set time is 5 seconds and the idle time T is 20 seconds in the drive control, the duration TR of one cycle including the drive control and the idle control is 30 seconds. Thus, the set number N in such a case is set to a value equal to the reference time BT divided by the duration TR mentioned above (30 seconds).

The reference speed BV is, for example, defined as the vehicle speed at which the working vehicle 1 performs work. The reference speed BV refers to the vehicle speed when the working vehicle 1 performs work (low-speed work) while travelling at a relatively low speed. Examples of low-speed work may include subsoiling using a subsoiler or a combination subsoiler, and furrowing using a furrower. For example, the vehicle speed during low-speed work is 1.5 to 3 km/h.

The reference distance BD is defined based on the distance of at least part of a travel path L for the working vehicle 1 in a predetermined agricultural field H (a reference agricultural field BH). The travel path L includes at least one straight section L1 in which the working vehicle 1 travels in a straight line, and a turn section L2 in which the working vehicle 1 turns.

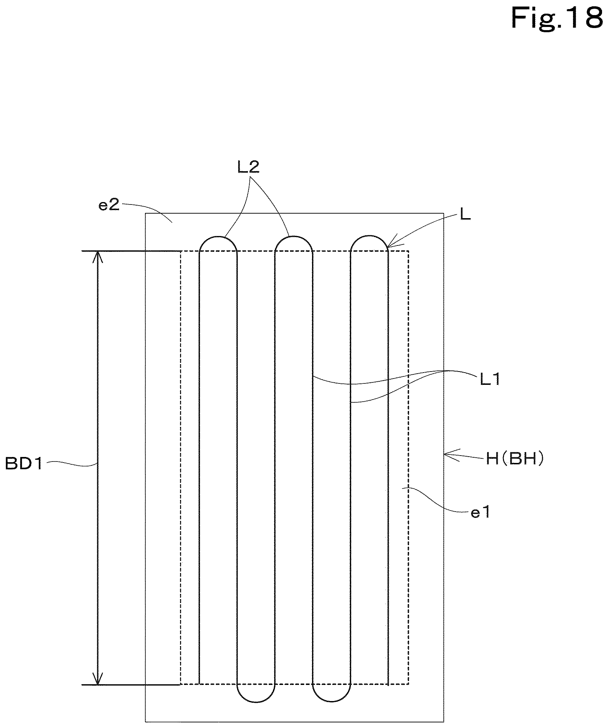

FIG. 18 illustrates an example of the travel path L on the agricultural field H. The example in FIG. 18 illustrates the travel path L for the working vehicle 1 on the agricultural field H having a substantially rectangular shape. The straight section L1 is located in a working region el (a region located inward of the headland and where work is performed) of the agricultural field H. The straight section L1 is a path extending from one end portion in the longitudinal direction of the working region e1 to the other end portion. The turn section L2 is located in a headland region e2 of the agricultural field H. The turn section L2 is a path connecting a plurality of straight sections L1. Accordingly, as the working vehicle 1 travels along the travel path L, the working vehicle 1 moves back and forth between the one end portion and the other end portion in the longitudinal direction of the agricultural field H.

The reference distance BD is the distance of a predetermined segment of the travel path L. For example, the reference distance BD is the distance traveled by the working vehicle 1 in the straight section L1 when the working vehicle 1 makes one round trip between one end portion and the other end portion in the longitudinal direction of the agricultural field H. In such a case, the reference distance BD is defined to be twice a length BD1 in the longitudinal direction of the working region e1 of the agricultural field H (BD = BD1 × 2). Thus, when the working region e1 has the length BD1 of 500 m in the longitudinal direction, the reference distance BD is 1000 m.

Accordingly, when the reference speed BV is 2 km/h, and the reference distance BD is 1000 m, the reference time BT obtained by dividing the reference distance BD by the reference speed BV is 1800 seconds, and the set number N is calculated to be 60 by dividing the reference time BT by the duration TR (30 seconds) of one cycle including the drive control and the idle control.

The above-mentioned example is directed to the case where the reference speed BV is the vehicle speed during low-speed work, and the set number N is defined based on the length BD1 in the longitudinal direction of the working region e1 of a predetermined agricultural field H (the reference agricultural field BH). The reference speed BV and the reference distance BD, however, are not limited to those mentioned above. For example, in a case where the input interface E is configured to accept input of information related to the reference speed BV and/or to the length BD1 in the longitudinal direction of the agricultural field H where the working vehicle 1 performs work, the set number N may be defined based on information input and accepted via the input interface E.

The set number N may be, for example, defined based on a tilt angle θ of the travel vehicle body 11 with respect to the horizontal plane. The tilt angle θ is an angle based on at least one of a roll angle or a pitch angle. According to the present example embodiment, the tilt angle θ, which is an angle of the travel vehicle body 11 with respect to the horizontal plane, is the absolute value of the roll angle of the travel vehicle body 11, with the horizontal position of the travel vehicle body 11 taken as the reference (zero) (see FIG. 6).

The set number N is defined such that the set number N is less when the tilt angle θ is a second tilt angle θ2 than when the tilt angle θ is a first tilt angle θ1. The tilt angle θ2 is less than the first tilt angle θ1. For example, the set number N is defined such that the set number N decreases as the tilt angle θ decreases. When the tilt angle θ is equal to or greater than a second threshold θt1, the set number N is equal to a reference number BN (BN = BT/TR), which is obtained by dividing the reference time BT by the duration TR of one cycle including the drive control and the idle control. Further, the set number N may be defined such that, when the tilt angle θ is less than the second threshold θt1, the set number N is less than the reference number BN, and decreases as the tilt angle θ decreases.

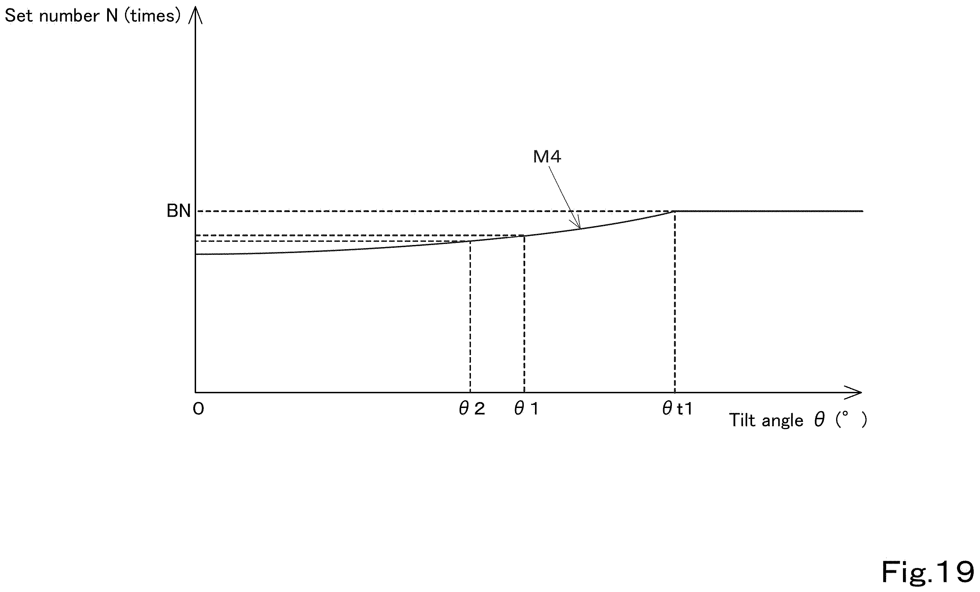

FIG. 19 is a fourth map M4 (graph) representing the relationship between the tilt angle θ and the set number N. In the fourth map M4 in FIG. 19, the horizontal axis represents the tilt angle θ, and the vertical axis represents the set number N. In the fourth map M4 in FIG. 19, the set number N changes such that, as the tilt angle θ increases, the set number N first increases along a downwardly convex curve, and then becomes constant (the reference number BN). The fourth map M4 is prestored in, for example, the storing device 62.

The controller 61 acquires the current tilt angle θ (the absolute value of the roll angle according to the present example embodiment) based on a detection result obtained from the attitude detector 68. Upon acquiring the tilt angle θ, the controller 61 acquires, based on the fourth map M4 stored in the storing device 62, the set number N corresponding to the acquired tilt angle θ.

The fourth map M4 may be such that as the tilt angle θ increases, the set number N first increases proportionately along a substantially straight line before becoming constant (the reference number BN), or first increases along an upwardly convex curve before becoming constant.

Although the above-mentioned example is directed to the case where the fourth map M4 is prestored in the storing device 62, the set number N may be defined (calculated) by correcting the reference number BN with a predetermined correction value that is based on the tilt angle θ.

Further, in a case where the set number N is defined based on the tilt angle θ of the travel vehicle body 11 with respect to the horizontal plane, the set number N may be defined based on a change Δθ in the tilt angle θ per unit time (a change in tilt angle), rather than being corresponding to the tilt angle θ itself. A change Δθ in tilt angle is the absolute value of a change per unit time in an angle based on at least one of the roll angle or the pitch angle.

The set number N is defined such that the set number N is less when a change Δθ in tilt angle is a second change Δθ2 than when the change Δθ in tilt angle is a first change Δθ1. The second change Δθ2 is less than the first change Δθ1. For example, the set number N is defined such that the set number N decreases as the change Δθ in tilt angle decreases. When the change Δθ in tilt angle is equal to or greater than a third threshold Δθt1, the set number N is equal to the reference number BN. Further, the set number N may be defined such that, when the change Δθ in tilt angle is less than the third threshold Δθt1, the set number N is less than the reference number BN, and decreases as the change Δθ in tilt angle decreases.

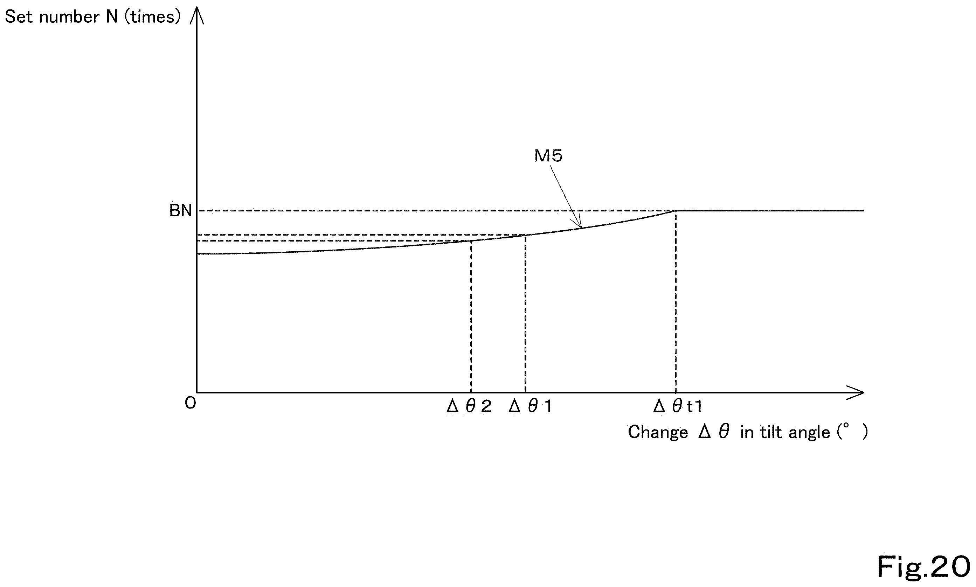

FIG. 20 is a fifth map M5 (graph) representing the relationship between a change Δθ in tilt angle and the set number N. In the fifth map M5 in FIG. 20, the horizontal axis represents a change Δθ in tilt angle, and the vertical axis represents the set number N. In the fifth map M5 in FIG. 20, the set number N changes such that, as the change Δθ in tilt angle increases, the set number N first increases along a downwardly convex curve, and then becomes constant (the reference number BN). The fifth map M5 is prestored in, for example, the storing device 62.

The controller 61 acquires the current tilt angle θ (the absolute value of the roll angle according to the present example embodiment) based on a detection result obtained from the attitude detector 68, and calculates a change Δθ in tilt angle per unit time (e.g., 30 seconds or 60 seconds). Upon acquiring the change Δθ in tilt angle, the controller 61 acquires, based on the fifth map M5 stored in the storing device 62, the set number N corresponding to the acquired change Δθ in tilt angle.

The fifth map M5 in FIG. 20 is an illustrative example. The fifth map M5 may be such that as a change Δθ in tilt angle increases, the set number N first increases proportionately along a substantially straight line before becoming constant (the reference number BN), or first increases along an upwardly convex curve before becoming constant.

Although the above-mentioned example is directed to the case where the fifth map M5 is prestored in the storing device 62, the set number N may be defined (calculated) by correcting the reference number BN with a predetermined correction value that is based on a change Δθ in tilt angle.

Further, the set number N may be defined based on the working device 100 attached to the coupling device 21. For example, the set number N may be defined such that the set number N is less when a second work is to be performed than when a first work is to be performed. The first work is a work in which a relatively large external force acts on the traveling device 31 in the width direction, or obstacles are present in the width direction of the traveling device 31. The second work is a work in which such an external force is relatively small, and relatively few such obstacles are present. An example of the first work may be a work performed with the reversible plow 100A, a subsoiler, or the like. An example of the second work may be a work performed with a cultivator, a ridger, or the like. For example, the set number N is stored in the storing device 62 in the form of a table in association with each working device 100 or each kind of work to be performed with the working device 100 (each type of the working device 100).

The storing device 62 may store a predetermined correction value corresponding to the working device 100, the kind of work to be performed, or the like, and the set number N may be defined (calculated) by correcting the reference number BN with the correction value. Based on information input and accepted via the input interface E, the controller 61 recognizes (identifies) the working device 100 or the kind of work to be performed with the working device 100, and acquires the set number N corresponding to the recognized working device 100 or kind of work.

For example, in a case where the input interface E is the display 63, the display 63 displays a predetermined input screen to accept input of information (device information) related to the working device 100 attached to the coupling device 21, and based on the device information input on the input screen, the controller 61 recognizes (identifies) the working device 100 or the kind of work to be performed with the working device 100. In a case where the input interface E is a communicator, the communicator may receive device information input on a predetermined input screen of a mobile terminal or the like carried by the operator, and the controller 61 may acquire the device information. In another example, in a case where the administrator has previously defined on an administrator terminal what kind of work is to be performed on the agricultural field H (work plan), and device information is included in the work plan, the communicator may receive the device information, and the controller 61 may acquire the device information.

If a plurality of working devices 100 are each equipped with a transmitter (e.g. a beacon) that emits individual identification information, the controller 61 may, based on identification information received by the input interface E (such as a receiver or a beacon scanner) from the beacon, identify the working device 100 attached to the coupling device 21, and acquire device information from a predetermined table stored in the storing device 62.

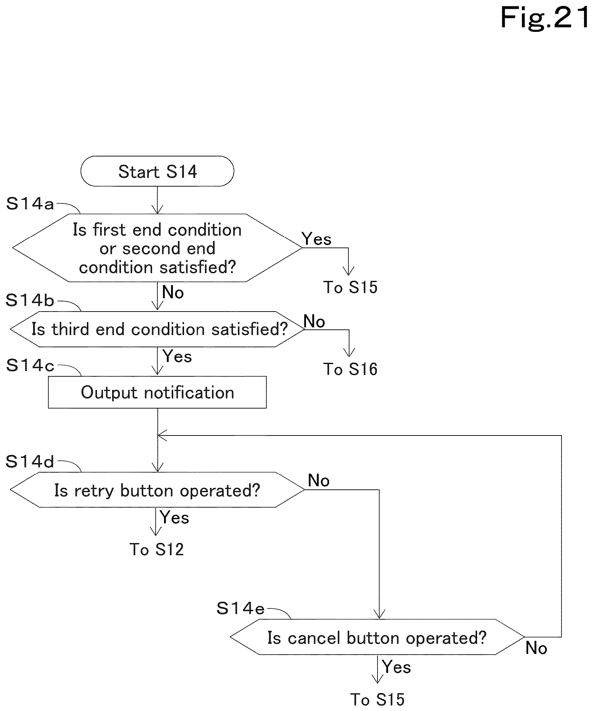

In determining at step S14 whether an end condition is satisfied, the controller 61 determines whether the number of executions has reached the set number N. FIG. 21 illustrates an example of the procedure for determining whether at least one end condition is satisfied.

As illustrated in FIG. 21, the controller 61 first determines whether the first end condition or the second end condition is satisfied (S14a). When the controller 61 determines that the first end condition or the second end condition is satisfied (S14a: Yes), the controller 61 proceeds to step S15, and ends the first change control. At this time, the controller 61 returns the execution counter in the memory to zero.

When the controller 61 determines that neither the first end condition nor the second end condition is satisfied (S14a: No), the controller 61 determines whether the third end condition is satisfied (S14b). For example, the controller 61 acquires the current tilt angle θ based on a detection result obtained from the attitude detector 68, and acquires, from the fourth map M4 in the storing device 62, the set number N corresponding to the current tilt angle θ. The controller 61 determines whether the third end condition is satisfied, based on whether the execution counter in the memory indicates a value equal to or less than the set number N.

When the controller 61 determines that the number of executions is less than the set number N and the third end condition is not satisfied (S14b: No), the controller 61 proceeds to step S16, and performs the idle control (S16).

When the controller 61 determines that the number of executions has reached the set number N and the third end condition is satisfied (S14b: Yes), the controller 61 controls the output interface 64 to cause the output interface 64 to output a notification (S14c). In other words, the output interface 64 outputs a notification when the number of times the controller 61 has performed the drive control reaches the set number N during the period from when the first change control is started (S11) to when the track width W1 satisfies the target value W2. For example, the controller 61 causes the display 63 to display a confirmation screen D2 indicating that it is not possible to continue the first change control. At this time, the controller 61 returns the execution counter in the memory to zero.

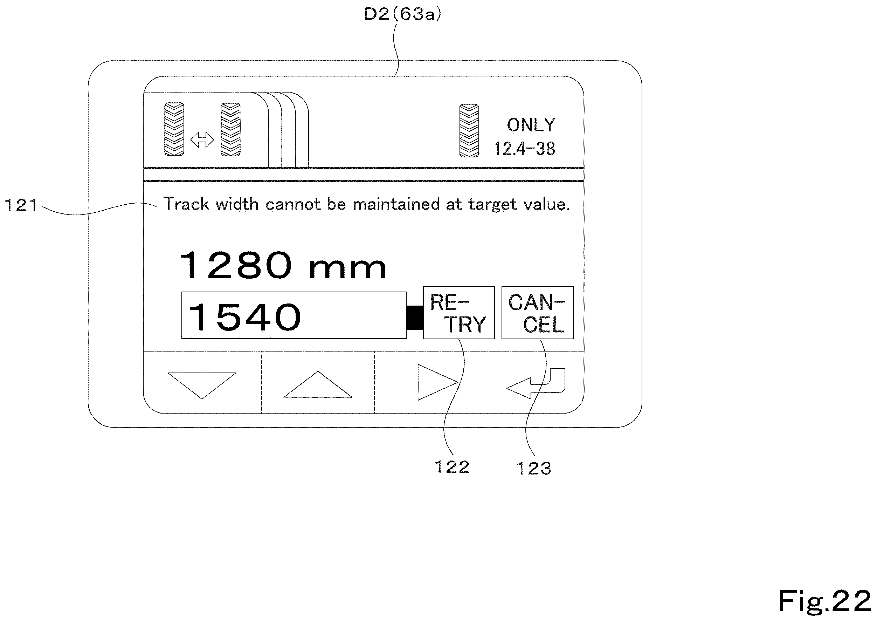

FIG. 22 illustrates an example of the confirmation screen D2. In the example in FIG. 22, the confirmation screen D2 includes a message display section 121, a Retry button 122, and a Cancel button 123.

The message display section 121 displays a message indicating that it is not possible to continue the first change control. In the example in FIG. 22, the message display section 121 displays the following message: "It is not possible maintain the track width at the target value." The message display section 121 is not limited to the example in FIG. 22. The message display section 121 may display a message that prompts the operator to perform maintenance on the working vehicle 1.

The Retry button 122 is a button to accept an operation for determining whether to perform the first change control again rather than ending the first change control. Thus, after step S14c, when the Retry button 122 is operated (S14d: Yes), the controller 61 returns to step S12, and performs the first change control again. The controller 61 may, when the Retry button 122 is operated (S14d: Yes), return to step S16, and perform the first change control again.

The Cancel button 123 is a button to accept an operation for determining whether to end the first change control. Thus, after step S14c, when the Retry button 122 is not operated (S14d: No), and the Cancel button 123 is operated (S14e: Yes), the controller 61 regards the end condition as being satisfied, and proceeds to step S15 to end the first change control. When the Cancel button 123 is not operated (S14e: No), the controller 61 returns to step S14d.

In the above-mentioned example, in response to determining that the third end condition is satisfied, the controller 61 causes the display 63 to display the confirmation screen D2. However, the controller 61 may control another output interface 64 to cause the other output interface 64 to output a notification. For example, the controller 61 may cause a speaker to output a beep sound, in addition to or instead of causing the display 63 to display the confirmation screen D2.

According to the present example embodiment mentioned above, the controller 61 performs the drive control and the idle control alternately during the first change control, until an end condition (the first end condition, the second end condition, or the third end condition) is satisfied. However, the controller 61 may suspend the first change control when a predetermined suspension condition is satisfied. In the first change process, the controller 61 determines whether the suspension condition is satisfied, and when the suspension condition is satisfied, the controller 61 suspends the first change control via an interrupt. When the suspension condition ceases to be satisfied, the controller 61 resumes the suspended first change process. The suspension condition will now be described with reference, by way of example, to first to fourth suspension conditions.

For example, the controller 61 may suspend the first change control based on the fluid temperature t (first suspension condition). The controller 61 suspends the first change control via an interrupt, when a rise Δt in the fluid temperature t per unit time (a rise in temperature) is equal to or greater than a fourth threshold. The fourth threshold is predefined in the storing device 62. The controller 61 acquires the current fluid temperature t based on a detection result obtained from the fluid temperature detector 65d, and calculates a rise Δt in temperature per unit time (e.g., 30 seconds or 60 seconds), and determines whether the rise Δt in temperature is equal to or greater than the fourth threshold. The fourth threshold may be editable as appropriate based on information input and accepted via the input interface E.

It may suffice that, based on the first suspension condition, the controller 61 suspends the first change control based on at least the fluid temperature t. The controller 61 may suspend the first change control via an interrupt, when the current fluid temperature t is equal to or greater than a first threshold. As with the fourth threshold, the first threshold may be predefined in the storing device 62, and editable as appropriate based on information input and accepted via the input interface E.

The controller 61 may suspend the current first change control when the travel vehicle body 11 is tilted at an angle equal to or greater than a predetermined angle with respect to the horizontal plane (second suspension condition). The controller 61 suspends the first change control via an interrupt when the tilt angle θ is equal to or greater than a fifth threshold θt2. The fifth threshold θt2 is predefined in the storing device 62. The controller 61 acquires the current tilt angle θ (the absolute value of the roll angle according to the present example embodiment) based on a detection result obtained from the attitude detector 68, and determines whether the tilt angle θ is equal to or greater than the fifth threshold θt2. The fifth threshold θt2 is preferably greater than the second threshold θt1. The fifth threshold θt2 may be editable as appropriate based on information input and accepted via the input interface E.

The controller 61 may suspend the current first change control when the working device 100 is performing work (third suspension condition). Specifically, the controller 61 suspends the current first change control when the controller 61 performs work on the agricultural field H provided with furrows G, ridges R, and the like. Exemplary cases when the agricultural field H is provided with furrows G and ridges R include when plowing is being performed with the reversible plow 100A coupled to the coupling device 21, and when work is performed after ridging has been done with a ridger.

For example, in a case where the working vehicle 1 includes a sensing device to sense the environment around the working vehicle 1 as in the case of light detection and ranging (LiDAR), the controller 61 determines, based on the result of sensing by the sensing device, whether the agricultural field H is provided with furrows G, ridges R, and the like. In a case where the input interface E accepts input of predefined information related to a plan (work plan) for the work to be performed on the agricultural field H, the controller 61 determines, based on the work plan input and accepted via the input interface E, whether the agricultural field H is provided with furrows G, ridges R, and the like.

The controller 61 determines whether the working device 100 is performing work, based on the state of various devices or equipment of the working vehicle 1, the environment around the working vehicle 1, and/or the like. For example, in a case where the coupling device 21 is coupled with the working device 100 such as a cultivator or plow that is switched by the raising/lowering device 21A1 between a working position in which work is performed and a non-working position in which work is not performed, the controller 61 is configured to, based on a detection result obtained from the height detector 65c or an operational signal from the raising/lowering operation actuator 67c, determine whether the working device 100 is performing work. In a case where the coupling device 21 is coupled with the working device 100 such as a cultivator or mower that is driven by power output from the PTO shaft 44 or by hydraulic fluid supplied via the auxiliary control valve 57b, whether the working device 100 is performing work can be determined based on an operational signal from the operating device 66 (such as the PTO operation actuator 67d) used to operate such a working device 100.

The method for determining whether the working device 100 is performing work is not limited to the exemplary method mentioned above. The controller 61 may, based on another method, determine whether the working device 100 is performing work. For example, in a case where the storing device 62 stores an agricultural field map representing the agricultural field H, and the working region e1 is defined in the agricultural field map, the controller 61 may determine whether the working device 100 is performing work, based on whether the working vehicle 1 is located within the working region e1. Specifically, when the working vehicle 1 is located within the working region e1, the controller 61 determines that the working device 100 is performing work. In the above-mentioned case, the working vehicle 1 is provided with a device such as a sensing device, or a position detector that performs positioning based on a satellite signal from a satellite positioning system via a GPS antenna. The controller 61 acquires the position of the working vehicle 1 based on a detection result obtained from such a device.

The controller 61 may, when the traveling device 31 causes the travel vehicle body 11 to turn (travel while making a turn), suspend the first change control instead of performing the first change control, until the track width W1 (actual track width) satisfies the target value W2 (target track width) (fourth suspension condition). For example, the controller 61 determines, based on the steering angle of the traveling device 31, whether the travel vehicle body 11 is turning. In such a case, the working vehicle 1 includes a steering angle detector 65f to detect the steering angle of a steering device. The controller 61 acquires the steering angle of the traveling device 31 based on a detection result obtained from the steering angle detector 65f. The steering angle detector 65f is a potentiometer (angle sensor) provided on a steering shaft.

The method for determining whether the travel vehicle body 11 is turning is not limited to the exemplary method mentioned above. The controller 61 may, based on another method, determine whether the travel vehicle body 11 is turning. For example, in a case where the storing device 62 stores an agricultural field map representing the agricultural field H, and the headland region e2 is defined in the agricultural field map, the controller 61 may determine whether the travel vehicle body 11 is turning, based on whether the working vehicle 1 is located within the headland region e2. Specifically, when the working vehicle 1 is located within the headland region e2, the controller 61 determines that the travel vehicle body 11 is turning.

In a case where the path to be travelled by the working vehicle 1 (planned line of travel) is predefined in the agricultural field map, the controller 61 may determine whether the travel vehicle body 11 is turning, based on the position where the working vehicle 1 is located and the predetermined line of travel. In such a case, the controller 61 determines that the travel vehicle body 11 is turning, when the working vehicle 1 is located in the turn section L2 of the planned line of travel.

In a case where the coupling device 21 is coupled with the working device 100 such as a cultivator or plow that is switched by the raising/lowering device 21A1 between the working position in which work is performed and the non-working position in which work is not performed, when the travel vehicle body 11 turns, the raising/lowering device 21A1 switches the working device 100 to the non-working position. Accordingly, the controller 61 may determine whether the travel vehicle body 11 is turning, based on a detection result obtained from the height detector 65c or an operational signal from the raising/lowering operation actuator 67c. In such a case, based on the detection result obtained from the height detector 65c or the operation signal from the raising/lowering operation actuator 67c, the controller 61 determines that the travel vehicle body 11 is turning, when the raising/lowering device 21A1 is in the non-working position.

When the controller 61 suspends the first change control in accordance with the fourth suspension condition, the controller 61 may perform a second change control instead of the first change control. In such a case, after suspending the first change process, the controller 61 performs, as a change process, a second change process in which the controller 61 performs the second change control.

The second change control is a control in which, until the track width W1 (actual track width) satisfies the target value W2 (target track width), the drive actuator 38 is continuously driven such that the actual track width W1 reaches the target track width W2. In other words, the second change control differs from the first change control in that the second change control repeats the drive control without performing the idle control. Unlike the first change control, the second change control does not include the third end condition as an end condition. In the second change control, until the fourth suspension condition is satisfied and the actual track width W1 satisfies the target track width W2, the drive control is repeated.

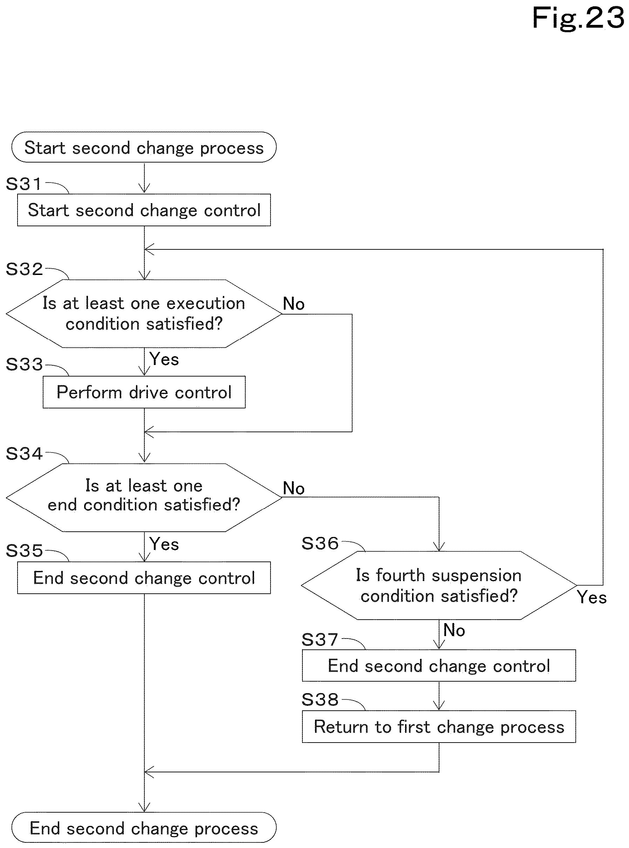

FIG. 23 illustrates an example of the procedure for the second change process. In the example of the second change process in FIG. 23, upon starting the second change control (S31), the controller 61 determines whether at least one execution condition is satisfied (S32). For example, the execution condition includes the first execution condition and the second execution condition.

When the controller 61 determines that the execution condition is satisfied (S32: Yes), the controller 61 performs the drive control once (S33). When the controller 61 determines that the execution condition is not satisfied (S32: No), or after the drive control when the controller 61 has performed the drive control (S33), the controller 61 determines whether at least one end condition is satisfied (S34). The end condition refers to a condition other than the third end condition. The end condition includes, for example, the first end condition and the second end condition.

When the controller 61 determines that the end condition is satisfied (S34: Yes), the controller 61 ends the second change control (S35), and ends the second change process. When the controller 61 determines that the end condition is not satisfied (S34: No), the controller 61 determines whether the fourth suspension condition is satisfied (S36).

When the controller 61 determines that the traveling device 31 has caused the travel vehicle body 11 to turn, and that the fourth suspension condition is satisfied (S36: Yes), the controller 61 returns to step S32. When the controller 61 determines that the traveling device 31 has not caused the travel vehicle body 11 to turn, and that the fourth suspension condition is not satisfied (S36: No), the controller 61 ends the second change control (S37), returns to the first change process that has been suspended (S38), and ends the second change process. Although an example of the second change process has been described above with reference to FIG. 23, the second change process is not limited to the above example.

Although the foregoing description is directed to the exemplary case where the controller 61 in the second mode performs the first change control as a change control, the controller 61 in the first mode may perform a third change control different from the first change control. In such a case, the controller 61 in the first mode performs, as a change process, a third change process in which the third change control is performed. The third change control is a control in which the drive control is performed only once. The third change control differs from the first change control and the second change control in that the drive control is not automatically repeated.

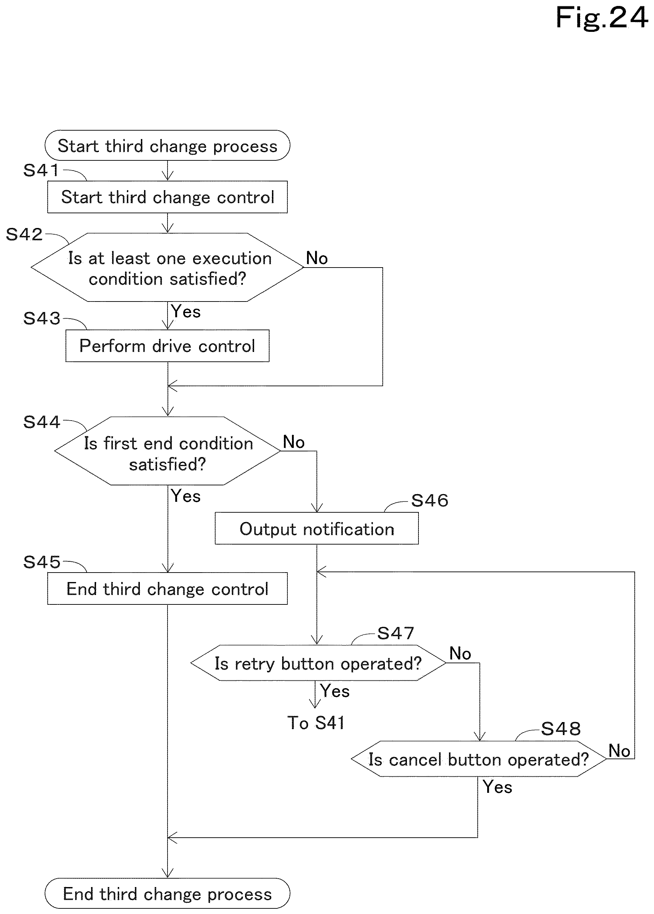

FIG. 24 illustrates an example of the procedure for the third change process. In the example of the third change process in FIG. 24, upon starting the third change control (S41), the controller 61 determines whether at least one execution condition is satisfied (S42). The execution condition includes, for example, the first execution condition and the second execution condition.

When the controller 61 determines that the execution condition is satisfied (S42: Yes), the controller 61 performs the drive control once (S43). When the controller 61 determines that the execution condition is not satisfied (S42: No), or after the drive control when the controller 61 has performed the drive control (S43), the controller 61 determines whether the first end condition is satisfied (S44).

When the controller 61 determines at S44 that the first end condition is satisfied (S44: Yes), the controller 61 ends the third change control (S45), and ends the third change process. When the controller 61 determines that the first end condition is not satisfied (S44: No), the controller 61 controls the output interface 64 to cause the output interface 64 to output a notification (S46). For example, the controller 61 causes the display 63 to display the confirmation screen D2.

After step S46, when the Retry button 122 is operated (S47: Yes), the controller 61 returns to step S41, and performs the third change control again. When, after step S46, the Retry button 122 is not operated (S47: No), and the Cancel button 123 is operated (S48: Yes), the controller 61 ends the third change control (S45), and ends the third change process. When the Cancel button 123 is not operated (S48: No), the controller 61 returns to step S47. Although an example of the third change process has been described above with reference to FIG. 24, the third change process is not limited to the above example.

Preferred embodiments of the present invention provide the working vehicle 1 described in items below.

(Item 1) A working vehicle 1 including a travel vehicle body 11, a traveling device 31 to support the travel vehicle body 11 such that the travel vehicle body 11 is allowed to travel, a changer 35C to be driven by a hydraulic actuator 39 to change a track width W1 of the traveling device 31, and a controller 61 configured or programmed to perform a first change control in which the controller 61 repeats a drive control until the track width W1 satisfies a target value W2, the drive control being a control to drive the hydraulic actuator 39 such that the track width W1 reaches the target value W2.

With the configuration of the working vehicle 1 according to item 1, in the first change control, the controller 61 repeats the drive control. This makes it possible to appropriately change the track width W1 to the target track width W2 without operation by the operator.

(Item 2) The working vehicle 1 according to item 1, wherein the controller 61 is configured or programmed to perform the drive control and an idle control alternately from when the first change control is started to when the track width W1 satisfies the target value W2, the idle control being a control to not drive the hydraulic actuator 39 for an idle time T.

The working vehicle 1 according to item 2 makes it possible to prevent or reduce an excessive rise in the temperature t of hydraulic fluid, which would otherwise occur due to continued application of an excessive load to the hydraulic actuator 39 even when the track width W1 does not change as desired due to factors such as the condition of the ground where the traveling device 31 is located.

(Item 3) The working vehicle 1 according to item 2, wherein the idle time T is defined based on a temperature t of hydraulic fluid to drive the hydraulic actuator 39.

The working vehicle 1 according to item 3 makes it possible to more appropriately prevent or reduce an excessive rise in fluid temperature t.

(Item 4) The working vehicle 1 according to item 3, wherein the idle time T is defined such that the idle time T is longer when a rise Δt in the temperature t of hydraulic fluid per unit time is a second rise Δt2 than when the rise Δt in the temperature t of hydraulic fluid per unit time is a first rise Δt1, the second rise Δt2 being greater than the first rise Δt1.

With working vehicle 1 according to item 4, the idle time T is defined in accordance with how the temperature t of hydraulic fluid tends to rise. This makes it possible to more appropriately prevent or reduce an excessive rise in fluid temperature t in the first change control.

(Item 5) The working vehicle 1 according to any one of items 2 to 4, wherein the controller 61 is configured or programmed to end the first change control when the number of times the controller 61 has performed the drive control reaches a set number N during a period from when the first change control is started to when the track width W1 satisfies the target value W2.

The working vehicle 1 according to item 5 makes it possible to avoid the risk of the first change control being continued even in situations where the changer 35C is unable to change the track width W1 due to factors such as the condition of the ground where the traveling device 31 is located. This in turn makes it possible to prevent or reduce an excessive rise in fluid temperature t.

(Item 6) The working vehicle 1 according to any one of items 2 to 5, further including an output interface 64 to output a notification when the number of times the controller 61 has performed the drive control reaches a set number N during a period from when the first change control is started to when the track width W1 satisfies the target value W2.

The above-mentioned configuration of the working vehicle 1 according to item 6 allows the operator to, based on the notification from the output interface 64, recognize that the first change control has been ended.

(Item 7) The working vehicle 1 according to item 5 or according to item 6 taken in combination with item 5, wherein the set number N is defined based on a tilt angle θ of the travel vehicle body 11 with respect to a horizontal plane.

The working vehicle 1 according to item 7 makes it possible to appropriately end the first change control in accordance with the tilt angle θ of the travel vehicle body 11, that is, the load acting on the traveling device 31 due to the weight load from the travel vehicle body 11, and thus prevent or reduce an excessive rise in fluid temperature t.

(Item 8) The working vehicle 1 according to item 7, wherein the set number N is defined such that the set number N is less when the tilt angle θ is a second tilt angle θ2 than when the tilt angle θ is a first tilt angle θ1, the second tilt angle θ2 being less than the first tilt angle θ1.

The working vehicle 1 according to item 8 makes it possible to appropriately end the first change control in accordance with the load acting on the traveling device 31, and thus prevent or reduce an excessive rise in fluid temperature t. Specifically, when the tilt angle θ is small, a smaller load may act on the traveling device 31 due to the weight load from the travel vehicle body 11, compared to when the tilt angle θ is large. Although the smaller load on the traveling device 31 makes it easier to change the track width W1, when the track width W1 is not changed as desired even through the tilt angle θ is relatively small, the first changer control is ended earlier than when the tilt angle θ is relatively large. This makes it possible to prevent or reduce an excessive rise in fluid temperature t.

(Item 9) The working vehicle 1 according to any one of items 2 to 8, wherein the controller 61 is configured or programmed to suspend the current first change control when the travel vehicle body 11 is tilted at an angle equal to or greater than a predetermined angle with respect to a horizontal plane.

When the tilt angle θ is large, the load acting on the traveling device 31 due to the weight load from the travel vehicle body 11 increases compared to when the tilt angle θ is small, and it may thus become more difficult to change the track width W1. Therefore, the working vehicle 1 according to item 9 makes it possible to prevent or reduce an excessive rise in fluid temperature t that would otherwise result from forcibly driving the hydraulic actuator 39 when the tilt angle θ is equal to or greater than a predetermined angle.

(Item 10) The working vehicle 1 according to any one of items 2 to 9, further including a working device 100 attached to the travel vehicle body 11 to perform work as the travel vehicle body 11 travels, wherein the controller 61 is configured or programmed to suspend the current first change control when the working device 100 is performing work.

When the working device 100 is performing work, the load on the traveling device 31 increases compared to when the working device 100 is not performing work, and it may thus become more difficult to change the track width W1. Therefore, the working vehicle 1 according to item 10 makes it possible to prevent or reduce an excessive rise in fluid temperature t that would otherwise result from forcibly driving the hydraulic actuator 39 when the working device 100 is performing work.

(Item 11) The working vehicle 1 according to any one of items 2 to 10, wherein the controller 61 is configured or programmed to perform a second change control instead of the first change control when the traveling device 31 causes the travel vehicle body 11 to turn, the second change control being a control in which the controller 61 continuously drives the hydraulic actuator 39 such that the track width W1 reaches the target value W2 until the track width W1 satisfies the target value W2.

When the travel vehicle body 11 turns, the condition of the ground where the traveling device 31 is located and other relevant conditions are more likely to change compared to when the travel vehicle body 11 moves straight ahead, and thus the load on the traveling device 31 is also relatively more likely to fluctuate. Therefore, with the working vehicle 1 according to item 11, the second change control is performed to change the track width W1 more actively than in the case of the first change control. This makes it possible to appropriately change the track width W1 while preventing or reducing an excessive rise in fluid temperature t.

While example embodiments of the present invention have been described above, it is to be understood that variations and modifications will be apparent to those skilled in the art without departing from the scope of the present invention. The scope of the present invention, therefore, is to be determined solely by the following claims.

## Claims

1. A working vehicle (1) comprising:
a travel vehicle body (11);
a traveling device (31) to support the travel vehicle body (11) such that the travel vehicle body (11) is allowed to travel;
a changer (35C) configured to be driven by a hydraulic actuator (39) to change a track width (W1) of the traveling device (31); and
a controller (61) configured or programmed to perform a first change control in which the controller (61) repeats a drive control until the track width (W1) satisfies a target value (W2), the drive control being a control to drive the hydraulic actuator (39) such that the track width (W1) reaches the target value (W2).

2. The working vehicle (1) according to claim 1, wherein the controller (61) is configured or programmed to perform the drive control and an idle control alternately from when the first change control is started to when the track width (W1) satisfies the target value (W2), the idle control being a control to not drive the hydraulic actuator (39) for an idle time (T).

3. The working vehicle (1) according to claim 2, wherein the idle time (T) is defined based on a temperature (t) of hydraulic fluid to drive the hydraulic actuator (39).

4. The working vehicle (1) according to claim 2 or claim 3, wherein the idle time (T) is defined such that the idle time (T) is longer when a rise (Δt) in the temperature (t) of hydraulic fluid per unit time is a second rise (Δt2) than when the rise (Δt) in the temperature (t) of hydraulic fluid per unit time is a first rise (Δt1), the second rise (Δt2) being greater than the first rise (Δt1).

5. The working vehicle (1) according to any one of claims 2 to 4, wherein the controller (61) is configured or programmed to end the first change control when the number of times the controller (61) has performed the drive control reaches a set number (N) during a period from when the first change control is started to when the track width (W1) satisfies the target value (W2).

6. The working vehicle (1) according to any one of claims 2 to 5, further comprising an output interface (64) configured to output a notification when the number of times the controller (61) has performed the drive control reaches a set number (N) during a period from when the first change control is started to when the track width (W1) satisfies the target value (W2).

7. The working vehicle (1) according to claim 5 or according to claim 6 taken in combination with claim 5, wherein the set number (N) is defined based on a tilt angle (θ) of the travel vehicle body (11) with respect to a horizontal plane.

8. The working vehicle (1) according to claim 7, wherein the set number (N) is defined such that the set number (N) is less when the tilt angle (θ) is a second tilt angle (θ2) than when the tilt angle (θ) is a first tilt angle (θ1), the second tilt angle (θ2) being less than the first tilt angle (θ1).

9. The working vehicle (1) according to any one of claims 2 to 8, wherein the controller (61) is configured or programmed to suspend the current first change control when the travel vehicle body (11) is tilted at an angle equal to or greater than a predetermined angle with respect to a horizontal plane.

10. The working vehicle (1) according to any one of claims 2 to 9, further comprising a working device (100) attached to the travel vehicle body (11) adapted to perform work as the travel vehicle body (11) travels; wherein
the controller (61) is configured or programmed to suspend the current first change control when the working device (100) is performing work.

11. The working vehicle (1) according to any one of claims 2 to 10, wherein the controller (61) is configured or programmed to perform a second change control instead of the first change control when the traveling device (31) causes the travel vehicle body (11) to turn, the second change control being a control in which the controller (61) continuously drives the hydraulic actuator (39) such that the track width (W1) reaches the target value (W2) until the track width (W1) satisfies the target value (W2).
